# EUROPÄISCHE PATENTSCHRIFT

(11) **EP 2 016 373 B1**
(45) Veröffentlichungstag und Bekanntmachung des Hinweises auf die Patenterteilung: **11.11.2015**
(21) Anmeldenummer: 07764521.6
(22) Anmeldetag: 29.03.2007
(51) Int. Cl.: G01D 5/353

(54) **VERFAHREN UND MESSEINRICHTUNG ZUR RÄUMLICH VERTEILTEN UND/ODER ENTFERNTEN MESSUNG VON PHYSIKALISCHEN GRÖSSEN**
METHOD AND MEASURING DEVICE FOR THE SPATIALLY DISTRIBUTED AND/OR REMOTE MEASUREMENT OF PHYSICAL VARIABLES
PROCEDE ET DISPOSITIF DE MESURE POUR LA MESURE REPARTIE DANS L'ESPACE ET/OU À DISTANCE DE GRANDEURS PHYSIQUES

(30) Priorität: 30.03.2006 DE 102006015159
(43) Veröffentlichungstag der Anmeldung: 21.01.2009
(73) Patentinhaber: Glombitza, Ulrich, 51429 Bergisch Gladbach (DE)
(72) Erfinder: Glombitza, Ulrich, 51429 Bergisch Gladbach (DE)
(86) Internationale Anmeldenummer: PCT/EP2007/002813
(87) Internationale Veröffentlichungsnummer: WO 2007/112937

(56) Entgegenhaltungen:
- US-A- 5 764 161

## Beschreibung

Die Erfindung betrifft ein Verfahren und eine Vorrichtung zur räumlich verteilten und/oder entfernten Messung von physikalischen Größen, vorzugsweise Dehnung, Schwingung oder Temperatur an ingenieurtechnischen Konstruktionen, unter Auswertung von aus einem Lichtwellenleiter rückgestreuter optischer Signale, sowie eine Messeinrichtung zur Durchführung des Verfahrens.

### Stand der Technik

Aus der DE 102 42 205 A1 und US-A-5 764 161 sind unter Bezugnahme auf die EP 0 692 705 A1 Verfahren und Messeinrichtungen beschrieben zur Bestimmung eines streckenabhängigen Temperaturprofils entlang eines Lichtwellenleiters sowie weiterhin ein Verfahren und eine Messeinrichtung, die angepasst ist, um ein streckenabhängiges Messprofil zur Erkennung einer Einwirkung von Feuchte oder Kräften auf den Lichtwellenleiter beschrieben. Dabei basiert das beschriebene Verfahren zur Temperaturbestimmung auf der Erfassung der Intensität des Rückstreulichtes im spektralen Raman-Band, während das dort beschriebene Verfahren zur Messung von Feuchte oder Krafteinwirkung aus der wellenlängenselektiven Auskoppelung von Raman-Streulicht oder vorzugsweise Rayleigh-Streulicht erfolgt. Das in der EP 0 692 705 A1 beschriebene Messprinzip wird auch als optische Frequenzbereichsreflektometrie bezeichnet und mit OFDR (Optical Frequency Domain Reflectometry) abgekürzt. Bei diesem Messprinzip wird als Lichtquelle ein FMCW-Laser eingesetzt, d. h. ein frequenzmodulierter Dauerstrichlaser.

Nachteil der in der EP 0 692 705 A1 beschriebenen Messverfahren, als auch weiteren ähnlichen Messverfahren, die in der Beschreibungseinleitung der genannten Veröffentlichung diskutiert sind, ist, dass für jede Messung eines Parameters oder einer physikalischen Größe jeweils ein komplettes entsprechend angepasstes Messsystem mit entsprechendem Investitionsaufwand erforderlich ist.

Demgegenüber ist in der DE 102 42 205 A1 ein Verfahren und ein Messsystem beschrieben, dass aufgrund der Erfassung sowohl das Raman-Streulicht ausgewertet wird als auch die Brillouin-Streuung erfasst wird und es dadurch möglich ist, sowohl die Temperatur als auch eine Dehnung der Glasfaser ortsabhängig mit einem einzigen Messsystem zu erfassen. Auch hierzu wird das Prinzip der OFDR-Technik vorgeschlagen.

Bei dem OFDR-Verfahren wird die Laserlichtquelle innerhalb eines Messzeitintervalls mit einer sinusförmigen Frequenz moduliert. Der Frequenzhub ist dabei ein direktes Maß für die örtliche Auflösung eines OFDR-Reflektometers. Das frequenzmodulierte Laserlicht wird in den Lichtwellenleiter eingekoppelt. An jedem Ort entlang der Faser entsteht Raman-Streulicht, das in alle Raumrichtungen strahlt. Ein Teil des Raman-Streulichtes erreicht in Rückwärtsrichtung das Auswertegerät. Das rückgestreute Licht wird spektral gefiltert und in den Messkanälen mittels Photodetektoren in elektrische Signale gewandelt, verstärkt und elektronisch weiterverarbeitet. Das daraus erhaltene analoge Messsignal wird in ein digitales Signal gewandelt und mit einem Mikroprozessor einer FourierTransformation unterworfen. Als Zwischenergebnis erhält man Raman-Rückstreukurven als Funktion der Kabellänge. Aus dem Verhältnis der Rückstreukurven kann die Fasertemperatur entlang des Lichtwellenleiterkabels ermittelt werden.

Als eine typische Messzeit eines OFDR-Raman-Temperatursensors beträgt bei einer 4 km langen Glasfaser, einer Ortsauflösung von 2 m und einer Temperaturgenauigkeit von ± 1 K etwa 25 Sekunden. Dies ist für typische Temperaturmessungen, beispielsweise zur Brandüberwachung von Tunnels, ausreichend, da die Ereignisse, die durch eine Temperaturerfassung typischerweise erfasst werden sollen, verhältnismäßig "langsam" sind. Beispielsweise dauert es bei einem Kfz-Brand in einem Tunnel ca. 3 min, bis ein Vollbrand eingetreten ist.

Der wesentliche Vorteil der OFDR-Technik ist die Möglichkeit, verhältnismäßig preiswerte Systemkomponenten zu verwenden.

Das wohl wichtigste diagnostische Messverfahren für faseroptische Übertragungsstrecken ist die Zeitbereichsreflektometrie oder "Optical Time Domain Reflectometry", abgekürzt OTDR. Mit diesem Verfahren können Faserbrüche lokalisiert, Spleiß- und Steckverbindungen beurteilt und ortsabhängige Dämpfungen des Glasfasermaterials über die Rayleigh-Streuung als Funktion der Faserlänge bestimmt werden. Bei diesem Verfahren werden sehr schmale Lichtimpulse in die Faser eingekoppelt. Die aus der Faser rückgestreute Lichtleistung setzt sich aus der Rayleigh-Streuung, die durch Inhomogenitäten innerhalb des Glasfasermaterials hervorgerufen wird, und dem Reflexionslicht von diskreten Störstellen zusammen. Mit Hilfe eines optischen Empfängers wird das optische Rückstreusignal in ein elektrisches Signal umgewandelt und weiterverarbeitet. Der Ort, von dem aus das Licht gestreut bzw. reflektiert wird, kann durch eine Laufzeitmessung ermittelt werden. Geht man davon aus, dass die Brechzahl entlang der Faser und somit die Gruppengeschwindigkeit des Lichtes innerhalb der Faser konstant ist, kann durch Messung der Laufzeitdifferenz zwischen dem Aussenden der Lichtimpulse und der Detektion der rückgestreuten Lichtimpulse ein direktes Maß für die zurückgelegte Strecke des Lichtes ermittelt werden, anhand derer der Reflexionsort ermittelt werden kann.

Die Forderung nach möglichst hoher Ortsauflösung eines OTDR-Reflektometers kann nur mit Lichtimpulsen kleiner optischer Breite erzielt werden. Dies hat zur Folge, dass bei hoher Ortsauflösung die mittlere optische Leistung, die in die Glasfaser eingekoppelt wird, vermindert, so dass sich das Signal/Rauschverhältnis des Empfängersignals verschlechtert. Durch diese guten Übertragungseigenschaften von Glasfasern ist die rückgestreute Lichtleistung sehr klein im Verhältnis zur eingespeisten Sendeleistung der Lichtquelle. Daher steht bei OTDR-Messungen nur ein geringer Dynamikbereich zur Verfügung. Die Messzeit in OTDR-Systemen wird daher vorwiegend durch die Anzahl der Mittelungen bestimmt, die notwendig sind, um ein ausreichendes Signal/ Rauschverhältnis zu erzielen. Um eine eindeutige Rückstreumessung und insbesondere Laufzeitmessung zu ermöglichen, muss gewährleistet sein, dass sich immer nur ein einziger Lichtimpuls in der Faser ausbreitet. Die minimale Impulswiederholrate wird daher durch die längste Laufzeit des Pulses in der Glasfaser bestimmt.

Es sind diverse Optimierungen des OTDR-Verfahrens bekannt, um den praktischen Anwendungsbereich zu erweitern. Eine spezielle Anwendung ist die so genannte Raman-OTDR-Temperaturmessung. Im Vergleich zum Rayleigh-Streulicht liegt das Raman-Streulicht in einem bis um den Faktor 1.000 kleineren Rückstreusignal vor. Um in vertretbarer Zeit ein farblich verteiltes Temperaturbild einer Glasfaser messen zu können, wird bei der Raman-OTDR-Temperaturmessung verhältnismäßig teure Technik eingesetzt, beispielsweise sind leistungsstarke und damit teure Pulslaserquellen in Form von Festkörperlasern und verhältnismäßig teure Signalmittelungstechniken erforderlich. Die Messzeit eines solchen OTDR-Raman-Temperatursensors in kommerzieller Ausführung beträgt bei einer 4 km langen Faser, einer Ortsauflösung von 2 m und einer Temperaturgenauigkeit von ± 1 K etwa 10 Sekunden.

Beispiele zur Anwendung des OTDR-Verfahrens sind bekannt aus EP 0 213 872 A2 und der DE 40 19 980. Bei letzterer wird eine längenwellenselektive Filterung der Rückstreusignale eingesetzt. Weiterhin werden das Reflexionslicht aus äquidistanten Faserorten zeitlich erfasst der Art, dass durch Wiederholung der Messung die Lichtintensität der einzelnen Messorte aufaddiert wird, so dass eine Verbesserung des Signal-/Rausch-Verhältnisses erzielt werden soll. Aus der US 5,765,948 ist eine Temperaturmessung nach dem OTDR-Prinzip bekannt. Dabei wird zusätzlich vorgeschlagen, einen dritten Messkanal vorzusehen, um das rückgestreute Rayleigh-Streulicht zu messen. Dieses dient zur Bestimmung der Faserdämpfung, um für die Temperaturberechnung notwendige Dämpfungskorrektur des Raman-Streulichtes durchführen zu können.

Aus der US 5,054,935 ist bei einer Raman-Temperaturmessung eine numerische Berechnungsvorschrift zur Dämpfungskorrektur der örtlich verteilten Temperaturmessdaten bekannt.

Ein weiteres bekanntes Verfahren ist die Kohärenzbereichsreflektometrie oder "Optical Coherence Domain Reflectometry", abgekürzt OCDR. Dieses Verfahren basiert auf einer kontinuierlich strahlenden breitbandigen Lichtquelle und einem Messinterferometer mit einem verschiebbaren Referenzspiegel. Ein Interferenzsignal kann bei der OCDR-Technik nur dann am Photodetektor gemessen werden, wenn der Gangunterschied bei-der optischer Wege innerhalb der Kohärenzlänge der Lichtquelle liegt, sog. Weißlichtinterferometrie. Durch Verschieben des Referenzspiegels erhält man unmittelbar eine Aussage über den Ort der einzelnen Reflexionsstellen entlang des Wellenleiters. Das OCDR-Verfahren ist prädestiniert für Wellenleiter mit kleinen Abmessungen von wenigen Millimetern. Die Anwendung des OCDR-Prinzips für die faseroptische Rückstreumessung von Glasfasern ist mit einer Variation möglich, dem so genannten Pseudo-Noise-Verfahren, auch Pseudo-Random-Noise-Verfahren genannt. Zwar wäre eine Lichtquelle mit weißem Rauschen von der Theorie her ideal für dieses Verfahren, jedoch kann dieses technisch nicht sinnvoll genutzt werden, da ein Eingangssignal und das Korrelationssignal reproduzierbar erzeugt werden müssen. Um eine möglichst einfache technische Realisierung zu erreichen, wird mit meistens digitaler Schaltungstechnik eine binäre Pseudo-Noise-Folge erzielt, die die Eigenschaften des weißen Rauschens nahezu erfüllen. Im Gegensatz zum OTDR-Verfahren werden dabei lang andauernde Impulssequenzen verwendet. Dadurch wird gegenüber der klassischen OTDR-Methode in deutlich verbessertes Signal/ Rauschverhältnis erreicht. Weiterhin wird im Unterschied zum OTDR-Verfahren anstelle eines Pulslasers ein Dauerstrichlaser verwendet. Dauerstrichlaserquellen besitzen gegenüber Pulslasern den Vorteil einer geringeren Belastung und damit einer wesentlich höheren Lebensdauer. Weiterhin besitzt das Pseudo-Noise-Sendesignal durch die lange Pseudo-Noise-Sequenz eine relativ hohe Energie, wodurch sich eine höhere Rückstreuleistung und damit eine Verbesserung des Signal/Rauschverhältnisses ergibt. Allerdings kann die Lichtleistung oberhalb der Schwelle für die Anregung nicht lineare Effekte, beispielsweise einer stimulierten Raman-Streuung liegen und somit zu einer Verfälschung der Orts- und Temperaturinformationen entlang der gesamten Faserstrecke führen.

Die Messzeit eines Pseudo-Noise-Raman-Temperatursensors der Firma Hitachi beträgt bei einer 4 km langen Faser, bei einer Ortsauflösung von 1 m und einer Temperaturgenauigkeit von ± 1 K etwa 30 Sekunden.

Anwendungen des Pseudo-Noise-Verfahrens sind aus GB 2 190 186 und JP 62179632 A bekannt.

Krafteinwirkungen auf eine optische Faser können über den Effekt des Microbending erfasst werden. Dabei erfolgt bei einer Krümmung oder Biegung des Lichtwellenleiters eine erhöhte Lichtabstrahlung. Diese Abstrahlverluste können gemessen werden. Bei der Transmissionsmessung werden die Abstrahlverluste als integrale Größe über die Länge der Faser gemessen, was durch sehr kostengünstige Einrichtungen erfasst werden kann. Allerdings ist es nicht möglich, die Krafteinwirkung auf die Faser örtlich aufzulösen. Ein solches Messsystem ist beispielsweise aus der WO 98/58231 bekannt. Eine Variante ist ein so genanntes optisches Extensometer, d. h. ein faseroptischer Wegaufnehmer. Ein solcher ist aus der WO 03/067198 A1 bekannt. Ein solches optisches Extensometer wird Vermessungen während beispielsweise einer Bauphase, für Probebelastungen oder dergleichen verwendet. Durch Vordehnung des Sensors sind Dehnungen und Stauchungen messbar. Aufgrund der Materialeigenschaften von Lichtwellenleitern beträgt der Messbereich solcher Einrichtungen maximal 5 ‰ der Sensorlänge.

Zur Temperaturmessung mit Lichtwellenleitern ist bekannt, die Raman-Streuung zu erfassen. Die Raman-Streuung wird zusätzlich zu der Rayleigh-Streuung, die durch die amorphe Struktur der Glasfaser hervorgerufen wird, durch Temperatureffekte erzeugt. Dabei handelt es sich um Streulicht, das dadurch entsteht, dass Licht auf thermisch angeregte Molekülschwingungen trifft und eine Wechselwirkung zwischen dem Licht und den Elektronen des Moleküls auftritt. Diese temperaturabhängige Lichtstreuung ist gegenüber dem einfallenden Licht spektral um den Betrag der Resonanzfrequenz der Gitterschwingung der Moleküle verschoben. Die Raman-Streuung ist im Vergleich zur Rayleigh-Streuung verhältnismäßig sehr klein. Die Raman-Streuung verteilt sich auf zwei Bänder, wobei das Stokes-Band nahezu temperaturunabhängig und das Antistokes-Band temperaturabhängig ist. Die Messung lokaler Temperatur an einem beliebigen Ort eines Lichtwellenleiters kann aus dem Verhältnis der Intensität von Antistokes- und Stokes-Band der Raman-Streuung ermittelt werden. Beispielsweise unter Anwendung der OFDR-Methode kann bei einem Raman-Rückstreuverfahren die Temperatur entlang der Glasfaser als Funktion von Ort und Zeit gemessen werden.

Eine Dehnung und auch eine Temperaturänderung einer Glasfaser lässt sich ferner über den Effekt der Bragg-Reflexion ermitteln. Dabei wird in die Glasfaser eine Struktur eingebracht, beispielsweise durch eine strukturierte UV-Belichtung, die eine höhere Brechzahl aufweist, so dass eine gitterartige Struktur entlang der Faserachse entsteht. Nur bei einer bestimmten Wellenlänge des einfallenden Lichts, die durch die Periode und Brechzahlengitterbereich bestimmt wird, können sich viele durch die Brechzahlmodulation hervorgerufene Teilreflexe zu einer intensiven Reflexion durch Interferenz überlagern. Da sowohl Brechungsindex als auch Gitterperioden eine Funktion von Dehnung und Temperatur sind, lässt sich durch eine Verschiebung der Wellenlänge der Bragg-Reflexion eine entsprechende Änderung dieser Größen erfassen. Ein Detektionssystem muss in der Lage sein, die zeitliche spektrale Verschiebung der reflektierten Bragg-Wellenlängen zu erfassen und auszuwerten. Als Detektionssystem wird daher im Allgemeinen ein spektrometrisches Verfahren angewendet, das neben einer wellenlängenselektiven Erfassung durch das Spektrometer einer zeitlichen Auswertung über eine CCD-Zeile ermöglicht.

Eine Abwandlung der faseroptischen Bragg-Gitter (Fiber Bragg Grating, abgekürzt FBG) sind die so genannten langperiodischen Gitter, auch "Long Period Fiber Grating" genannt, abgekürzt LPG oder LPFG. Diese Gitter haben im Vergleich zu FBG wesentlich größere Gitterperioden und Längsabmessungen. Bei FBG liegt die Periode der Brechzahländerungen im Bereich von einigen hundert Nanometern. Bei LPG liegt diese zwischen 50 µm und 1 mm. Anders als bei FBGs, bei denen Licht einer vorwärtslaufenden Lichtwelle (Fasermode) in eine Rückwärtslaufende gekoppelt wird, werden im LPG zwei vorwärtslaufende Moden miteinander verkoppelt, so dass das transmittierte Licht für sensorische Aufgaben ausgewertet werden kann. Der Vorteil der LPG-Sensoren ist eine einfachere Fertigung, geringere Einfügeverluste und eine höhere Empfindlichkeit auf Dehnung, Temperatur und Krümmung der Glasfaser.

Das Prinzip der LPG-Sensoren beruht bei Quarzglasfasern (schwach führend) auf der resonanten Kopplung zweier in Vorwärtsrichtung laufender Lichtwellen (Fasermoden). Fasermoden sind in der Glasfaser orthogonal zueinander und koppeln erst durch eine Faserstörung untereinander. Erfolgt die Störung z.B. durch eine periodische Brechzahländerung im Faserkern, kommt es zu einem Energieaustausch der Moden. Die an der Kopplung beteiligten Moden sind bei LPG-Sensoren in der Regel eine im Faserkern geführte Mode (Grundmode, Kernmode) und eine im Fasermantel laufende Mantelmode.

Ist der Ausbreitungskoeffizient der Kernmode mit den Ausbreitungskoeffizienten der Mantelmode über die Gitterkonstante des LPG phasenangepasst, dann wird das im Faserkern geführte Licht in die geführte Mantelmode des Fasermantels gekoppelt. Diese Phasenanpassungsbedingung wird als Resonanzbedingung für das LPG bezeichnet. Die Resonanzbedingung ist eine implizite Gleichung, da die effektiven Brechzahlen durch die Dispersion der Faser (Material- und Wellenleiterdispersion) wellenlängenabhängig sind. Das in die Mantelmoden gekoppelte Licht ist sehr sensitiv und wird üblicherweise abgestrahlt, so dass in Transmissionsrichtung Lichtauskopplungen bei den Wellenlängen vorliegen, an denen die Resonanzbedingung erfüllt wird. Bei Veränderungen der LPG-Gitterkonstanten, z.B. durch axiale Zugkräfte, tritt eine spektrale Verschiebung dieser Resonanzstellen auf, die die Messung der Einwirkungsgröße ermöglicht.

Aufgrund der größeren geometrischen Erstreckung besteht mit LPG-Sensoren auch die Möglichkeit, Biegungen der Faser zu messen. Aus der WO 00/170307 A2 ist ein solcher LPG-Sensor bekannt, der eine zweidimensionale Krafteinwirkung erfassen können soll.

Auch ist bekannt, FBG-Sensoren zu verwenden, um Raman-Temperatursensoren nachzukalibrieren. Dies ist interessant unter Umgebungsbedingungen, bei denen eine erhöhte Wasserstoffanreicherung der Faser erfolgt und damit eine damit verbundene Dämpfungserhöhung eine Fehlkalibrierung der Raman-Temperaturkurve nach sich zieht, vgl. WO 03/098176.

In DE 10 2005 055 431 A1 ist eine Anordnung und Verfahren zur Überwachung des Belastungsverhaltens von Hochspannungsfreileitungen beschrieben, dass die Kombination eines FBG-Sensors zur Dehnungsmessung des Freileitungsseils mit dem eines Raman-Temperatursensors zur Temperaturmessung des Freileitungsseils vorsieht. Es werden zwei unabhängige Auswerteeinheiten benötigt, mit entsprechend hohen Kosten.

Da optische Reflektometer nach dem Rückstreuprinzip arbeiten, d. h. dass das aus einer Messfaser rückgestreute Licht ausgewertet wird, ist es Voraussetzung, dass nur eine einzige Faserstrecke existiert, da sonst eine eindeutige Zuordnung für Messzeit und Messstrecke nicht erfolgen kann. Ist es also erforderlich oder erwünscht, mehrere Faserstrecken zu überwachen, müssen diese zu einer gemeinsamen Strecke verbunden werden, oder diese werden mit Hilfe eines optischen Schalters im Reflektometer zeitlich nacheinander aufgeschaltet und jeweils eine Messung durchgeführt. Da nur eine Auswerteinrichtung erforderlich ist, lassen sich dadurch die Kosten, bezogen auf einzelne Messpunkte und Messstrecke, deutlich reduzieren. Eine solche Anordnung ist beispielsweise aus der DE 102 42 205 A1 bekannt.

Trotz des hohen Entwicklungsstandes von Messverfahren mit faseroptischen Sensoren sind deren Anwendungsgebiete nach wie vor begrenzt, da die bekannten Verfahren einerseits starke spezifische Gebrauchseinschränkungen aufweisen, andererseits verhältnismäßig hohe Kosten für die Auswerteinrichtungen entstehen.

Der Erfindung liegt daher die Aufgabe zugrunde, das Anwendungsgebiet von faseroptischen Sensoren zu erweitern und insbesondere den Einsatz von faseroptischen Sensoren wirtschaftlich attraktiver zu gestalten.

Diese Aufgabe wird gelöst durch die in den unabhängigen Ansprüchen definierten Verfahren und Vorrichtungen. Vorteilhafte und zweckmäßige Ausbildungen der Erfindung sind in den Unteransprüchen definiert.

### Darstellung der Erfindung

Der Kern des erfindungsgemäßen Verfahrens zur räumlich verteilten und/oder entfernten Messung mindestens einer physikalische Größe, vorzugsweise Dehnung, Schwingung oder Temperatur an ingenieurtechnischen Konstruktionen unter Auswertung von aus wenigstens einem Lichtwellenleiter rückgestreuter optischer Signale, besteht darin, dass ein elektrisches digitales Modulationssignal zur Erzeugung eines modulierten Laserlichts dient, und dass das aus dem wenigstens einen Lichtwellenleiter rückgestreute Signal breitbandig einem Analog/Digital-Wandler zugeführt und in ein digitales Antwortsignal umgesetzt wird, wobei das digitale Antwortsignal n-fach mit dem Modulationssignal zur Bildung von n Messdatensätzen korreliert wird, und die n Messdatensätze an einen Auswerterechner zur Auswertung unmittelbar oder über eine Zwischenspeicherung zur Bildung und Ausgabe ortsaufgelöster Messwerte übergeben werden.

Der besondere Vorteil der Erfindung liegt darin, dass mittels breitbandiger, direkter Digitalisierung der Signale eine sehr kostengünstige, Verarbeitung und Auswertung der Messsignale ermöglicht wird. Mit der Erfindung wird ausgenutzt, dass das optische Rückstreusignal alle verwertbare Information der Messstrecke enthält. Die Informationsinhalte (Messsignale) bestehen aus den physikalischen Eigenschaften aller räumlich über die Messstrecke verteilter Ortspunkte. Die Information über die physikalischen Eigenschaften der Ortspunkte wird ohne vorherige Bewertung breitbandig, parallel mit erheblichem Zeitgewinn verarbeitet. In einem analogen Mess- und Verarbeitungsverfahren müsste entweder die Information zeitlich hintereinander oder mit hohem apparativen Aufwand mehrkanalig abgearbeitet werden.

Weitere Einzelheiten und Merkmale der Erfindung, die einzeln oder gemeinsam miteinander als vorteilhafte Ausgestaltungen zu verstehen sind, werden im Folgenden kurz angesprochen.

Das Modulationssignal wird einer Vielzahl von n Zwischenspeichern mit jeweils einer vorbestimmten Zeitverzögerung zugeführt, und das digitale Antwortsignal wird n-fach mit dem verzögerten Modulationssignal aus den n Zwischenspeichern korreliert.

Mit dieser n-fachen digitalen Verarbeitung und Auswertung der Messsignale lassen sich mehr als z.B. n=1000 Ortspunkten der räumlichen Messstrecke gleichzeitig (parallel) verarbeiten und auswerten. Mit einem analogen Mess- und Verarbeitungsverfahren wäre die Parallelverarbeitung technisch nicht sinnvoll und ökonomisch nicht vertretbar.

Vorzugsweise soll das Referenzsignal des Modulationssignals unmittelbar einer digitalen Auswerteeinrichtung zugeführt werden.

Der wenigstens eine Lichtwellenleiter kann in unterschiedlichen Ausführungen ausgebildet und eingesetzt sein. Die Alternativen sind:
- Lichtwellenleiter wird als Sensorfaser verwendet;
- Lichtwellenleiter wird versehen mit Fibre-Bragg-Grating-Fasergitter verwendet,
- Lichtwellenleiter wird versehen mit langperiodischem Fasergitter verwendet oder
- Lichtwellenleiter wird als Sensorfaser mit mehreren Fibre-Bragg-Grating-Fasergittern verwendet, wobei auch Kombinationen der Alternativen denkbar sind.

Es wird dabei eine Pumplichtquelle mit schmalbandigem Emissionsspektrum verwendet, zur Erzeugung der spontanen breitbandigen Stoke-Raman-Streuung als intrinsische Strahlungsquelle. Diese Strahlungsquelle wird verwendet zur Bestimmung der Bragg-Wellenlängenverschiebung an mindestens einem im Lichtwellenleiter eingesetzten Fibre-Bragg-Grating-Fasergitter und zur Erzeugung der Resonanzbedingung für die Kopplung der beteiligten Moden an dem langperiodischen Fasergitter.

Die Bestimmung der Bragg-Wellenlängenverschiebung kann durch die Auswertung der Intensitätsänderung der Stokes-Amplitude des rückgestreuten Raman-Lichtes erfolgen.

Die Bestimmung der spektralen Verschiebung des Lichts der langperiodischen Fasergitter-Sensoren kann durch die Auswertung des Stokes-Raman-Spektrums des transmittierten Raman-Lichtes erfolgen.

Zur Bestimmung von physikalischen Daten an einem oder mehreren Orten entlang des Lichtwellenleiters, vorzugsweise benachbart zu dem oder den mit einem Fibre-Bragg-Grating-Fasergitter(n) versehenen Orten wird nach dem erfindungsgemäßen Verfahren das rückgestreute Raman-Licht der Sensorfaser ausgewertet, und es erfolgt mit den so erhaltenen Informationen über Temperatur und Bragg-Wellenlängenverschiebung eine rechnerische Korrektur der Querempfindlichkeit für die Messung von Temperatur, Dehnung und/oder Biegung.

Aus der Bestimmung der Temperatur durch Auswertung des rückgestreuten Raman-Lichtes von zu dem oder den Fibre-Bragg-Grating-Fasergitter(n) benachbarten Messorten erfolgt eine rechnerische Korrektur zur Bestimmung der Bragg-Wellenlängenverschiebung von Auslöschungseffekten an einem oder mehreren Fibre-Bragg-Grating-Fasergitter(n), die zwischen dem aktuell betrachteten Messort und einer oder mehreren innerhalb der Messeinrichtung angeordneten Empfangsstufe(n) gelegen sind.

Vorzugsweise kann Pseudo-Noise-moduliertes Laserlicht in den wenigstens einen Lichtwellenleiter für den Messvorgang eingespeist werden.

Zur Durchführung von räumlich verteilten und/oder entfernten Messungen von physikalischen Größen unter Auswertung von aus wenigstens einem Lichtwellenleiter rückgestreuter optischer Signale wird eine Messeinrichtung vorgestellt, wobei diese eine Strahlenquelle zur Aussendung eines modulierten Laserlichtes und wenigstens einen Anschluss für einen Lichtwellenleiter umfasst, und folgende weiteren Eigenschaften, bzw. Einzelheiten hat:
- der Lichtwellenleiter ist mit einer das rückgestreute Licht in ein elektrisches Signal wandelnde Empfangsstufe verbunden,
- ein ein digitales elektrisches Modulationssignal erzeugender Codegenerator ist mit wenigstens einem analog/digitalem Auswertebauteil verbunden, wobei das Modulationssignal zur Erzeugung eines modulierten Laserlichts dient,
- der Codegenerator ist mit der digitalen Auswerteeinrichtung verbunden,
- die Empfangsstufe ist mit einem Tiefpassfilter der digitalen Auswerteeinrichtung verbunden zur Beseitigung hochfrequenter Störungen des von dem Lichtwellenleiter rückgestreuten Signals,
- das Tiefpassfilter ist mit dem Eingang eines Analog-Digitalwandlers verbunden zur breitbandigen Wandlung des demodulierten Rückstreusignals in ein digitales Antwortsignal,
- und die wenigstens eine digitale Auswerteeinrichtung umfasst n Korrelationsstufen zur Korrelation des digitalen Antwortsignals jeweils mit dem Modulationssignal zur Bildung von n Messdatensätzen,
- wobei die digitale Auswerteeinrichtung einen Ausgang umfasst zur Ausgabe der n Messdatensätze an einen Auswerterechner zur Auswertung unmittelbar oder über einen Zwischenspeicher zur Bildung und Ausgabe ortsaufgelöster Messwerte.

Der Codegenerator in der Messeinrichtung kann mit einer Anzahl n von in der digitalen Auswerteeinrichtung vorhandenen n Zwischenspeichern verbunden sein, die jeweils eine vorbestimmbare Zeitverzögerung erzeugen, und die digitale Auswerteeinrichtung kann eine Vielzahl von n Korrelationsstufen umfassen zur Korrelation des digitalen Antwortsignals jeweils mit dem verzögerten Modulationssignal aus der Vielzahl der n Zwischenspeicher zur Bildung von n Messdatensätzen.

Die Messeinrichtung kann mehrere digitale Auswerteeinrichtungen aufweisen, die sich jeweils in der Auswertung einer physikalischen Größe unterscheiden. Vorzugsweise können drei digitale Auswerteeinrichtungen vorhanden sein, wenn das Ziel der Messung beispielsweise die Größen Temperatur, Biegung und Schwingung sind. Das Besondere ist, dass Auswerteeinrichtungen nur einmal benötigt werden, trotz Parallelverarbeitung. Die Anzahl der optischen Messkanäle und die Zahl der Empfangsstufen ergibt sich aus der Anzahl der zu messenden physikalischen Parameter.

Bevorzugt sollte mindestens eine digitale Auswerteeinrichtung mit einer Einrichtung zur Ermittlung eines Referenzsignals zur Korrektur von systembedingten Signalstörungen ausgerüstet sein.

Zur Verfeinerung der Messeinrichtung kann einer aus Sende- und Empfangsstufe bestehenden Einrichtung eine optische Rückleitung angeschlossen sein, über welche von beiden Enden mindestens eines mit langperiodischem Fasergitter ausgestatteten Lichtwellenleiters das transmittierte spektral bewertete Stokes-Raman-Signal zur vorgenannten Einrichtung gelangt und die vorgenannte Einrichtung zur Auswertung nach einem spektrometrischen Verfahren ausgerüstet ist.

Die aus Sende- und Empfangsstufe bestehende Einrichtung kann zur Auswertung der spektralen Verschiebung von Resonanzstellen im Stokes-Raman-Spektrum der langperiodischen Fasergittern in transmittierter Richtung ausgerüstet sein.

Die Messeinrichtung kann weiter folgende bevorzugte Eigenschaften und Einzelheiten aufweisen:
- die aus Sende- und Empfangsstufe bestehende Einrichtung verfügt über mehrere Anschlüsse für in faseroptischen Sensorkabeln eingebettete Lichtwellenleiter,
- wobei den Sensorkabeln jeweils faseroptische Feldschalter vorgeschaltet sind,
- eine Anzahl faseroptischer Feldschalter sind außerhalb der Messeinrichtung und mit ihr verbunden angeordnet,
- diese Feldschalter liegen hintereinander und sind jeweils mit wenigstens einem Sensorkabel verbunden,
- wobei jeder Feldschalter einen Dekodierer enthält, über den eine Steuerinformation aus der Verbindung mit einem anderen Feldschalter oder der aus Sende- und Empfangsstufe bestehende Einrichtung empfangbar ist.

Die Messeinrichtung lässt sich besonders vorteilhaft mit einem faseroptischen Sensorkabel betreiben, welches zur Verwendung in der Messeinrichtung ausgebildet ist.
Dieses Sensorkabel kann - je nach Ausbildung des Lichtwellenleiters - unterschiedlich aufgebaut sein.
Hierbei umfasst das Sensorkabel entweder
- wenigstens einen Abschnitt, in dem ein Lichtwellenleiter liegt,
- oder einen Lichtwellenleiter versehen mit mindestens einem Temperatursensor-Messabschnitt,
- oder einen Lichtwellenleiter versehen mit einem Abschnitt mit mindestens einem Fasergitter unter Verwendung einer Vorlauflänge zur Erzeugung des Raman-Stokes-Lichtes,
- oder einen Lichtwellenleiter mit einer kombinierten Anordnung von Abschnitten bestehend aus Temperatursensor-Messabschnitten mit mindestens einem Fibre-Bragg-Grating-Fasergitter,
- oder einen Lichtwellenleiter mit einer kombinierten Anordnung von Abschnitten bestehend aus Temperatursensor-Messabschnitten mit mindestens einem langperiodischen. Fasergitter.

Das Sensorkabel sollte wenigstens einen Messabschnitt aufweisen zur gleichzeitigen Rückstreumessung von mehr als einer physikalischen Größe, wobei innerhalb des wenigstens einen Messabschnitts ein Fibre-Bragg-Grating-Fasergitter angeordnet ist. Das Fibre-Bragg-Grating-Fasergitter sollte innerhalb des Messabschnitts so angeordnet sein, dass der in Richtung zu einem Anschluss für eine aus Sende- und Empfangsstufe bestehende Einrichtung liegende proximale Teil des Messabschnitts entlang des Sensorkabels länger ist, als der entfernter liegende distale Teil des Messabschnitts ohne Fibre-Bragg-Grating-Fasergitter.

Im Sensorkabel sollte das wenigstens eine Fasergitter ein langperiodisches Fibre-Bragg-Grating-Fasergitter sein mit einer Gitterperiode von etwa 300 nm bis etwa 600 nm, vorzugsweise 500 nm bis 550 nm. Es können mehrere Messabschnitte mit jeweils nur einem Fibre-Bragg-Grating-Fasergitter vorhanden sein, wobei die Fibre-Bragg-Grating-Fasergitter jeweils eine voneinander unterschiedliche Gitterperiode aufweisen.

Vorzugsweise kann es so eingerichtet werden, dass die Fibre-Bragg-Grating-Fasergitter bei mehreren Rückstreukanälen jeweils den gleichen Gitterabstand aufweisen.

Das wenigstens eine Fasergitter im Sensorkabel soll ein langperiodisches Fasergitter sein mit Abmessungen einer Gitterperiode im Bereich von etwa 30 µm bis etwa 600 µm, vorzugsweise auf einer Länge von 1 cm bis 6 cm.

Die langperiodische Fasergitter weist bei mehreren Transmissionskanälen vorteilhafterweise jeweils den gleichen Gitterabstand auf.

Zum Aufbau des Sensorkabels wird weiter unten noch näheres ausgeführt. Wesentlich ist, das es eine - vorzugsweise aus Edelstahl oder geeignetem Kunststoff hergestellte Hülle hat, in der sich wenigstens ein Lichtwellenleiter befindet, wobei der Lichtwellenleiter in der Hülle mit Spiel angeordnet ist und der Lichtwellenleiter eine größere Länge hat als die Länge der Hülle. Vorzugsweise beträgt die für die Herstellung des Spiels verwendete Mehrlänge des Lichtwellenleiters gegenüber der Hülle etwa 0,05 % bis 0,3 %. Sie kann jedoch insbesondere im Bereich 0,1 % bis 0,2 % liegen.

Der Zwischenraum zwischen Lichtwellenleiter und Hülle kann zur Verbesserung der Lagerung (verbesserte Stoßdämpfung) mit einem Gel gefüllt sein.

Das Sensorkabel sollte mit einer zweiteiligen Zugvorrichtung versehen sein, die mit einem in einer ingenieurtechnischen Konstruktion angeordneten Messobjekt fest verbindbar ist, wobei die Zugvorrichtung eine Wickeleinrichtung umfasst, um das Sensorkabel so aufzuwickeln, dass der Lichtwellenleiter entlang einer zu untersuchenden Messtrecke an der Innenseite der Hülle zur Anlage kommt, so dass sich eine durch das Messobjekt auf die Hülle des Sensorkabels aufgeprägte Längenänderung und/oder eine aufgeprägte Biegung auf den Lichtwellenleiter überträgt.

Die durch die Zugvorrichtung erreichte Berührung des Lichtwellenleiters mit der Hülle im Bereich der Wickeleinrichtung erhöht weiterhin die Empfindlichkeit bei Dehnungs- und Schwingungsmessungen.

Die zweiteilige Zugvorrichtung kann zusätzlich eine Einrichtung zur Vorspannung des Sensorkabels derart umfassen, dass die Hülle wenigstens soweit gestreckt werden kann, dass der Lichtwellenleiter innerhalb der Hülle elastisch vorgespannt ist.

Mit der vorliegenden Erfindung werden Verfahren und Einrichtungen vorgestellt, die besonders für Dehnungs-, Biege- und/oder Schwingungsmessungen bei Bauwerken oder an elektrischen Freileitungen verwendet und zum vorteilhaften Einsatz gebracht werden können. Durch die Verwendung der intrinischen-Raman Strahlungsquelle lässt sich das Verfahren und die Messeinrichtung auf Raman-Temperaturmessungen leicht erweitern.

### Kurzübersicht über die Figuren

Die Erfindung soll nachfolgend anhand von einigen Ausführungsbeispielen in den Figuren näher erläutert werden. Es zeigen:
- Figur 1: eine schematische Darstellung eines erfindungsgemäßen Pseudo-Random-Noise-Raman-Rückstreu-Reflektometers mit einem optischen Referenzkanal und zur Ermittlung von Messdatensätzen der einzelnen Orte entlang eines faseroptischen Sensorkabels;
- Figur 2: eine schematische Darstellung eines erfindungsgemäßen 3-kanaligen Pseudo-Random-Noise-Raman-Rückstreu-Reflektometers ohne optischen Referenzkanal und mit paralleler Ermittlung von Messdatensätzen der einzelnen Orte entlang eines faseroptischen Sensorkabels; mit der Option das transmittierte Raman-Signal eines LPG-Sensors oder mehrerer parallel geschalteter LPG-Sensoren zu messen;
- Figur 3a: verschiedene Anordnungen eines in eine Messeinrichtung nach dem Stand der Technik integrierten faseroptischen Schalters zur Verbindung jeweils eines von mehreren faseroptischen Sensorkabeln mit der Messeinrichtung;
- Figur 3b: eine Anordnung einer erfindungsgemäßen Messeinrichtung mit integrierten faseroptischen Schalters für die Transmissionsmessung eines LPG-Fasergitters und für die Reflektionsmessung von mindestens eines FPG-Fasergitters in Kombination eines faseroptischen Reflektometers;
- Figur 4: eine Anordnung einer erfindungsgemäßen Messeinrichtung mit einer Mehrzahl von externen faseroptischen Feldschaltern zur Verbindung jeweils eines von mehreren faseroptischen Sensorkabeln mit der Messeinrichtung;
- Figur 5: ein erfindungsgemäßes faseroptisches Sensorkabel zur Messung von Biegungen eines Messobjekts, insbesondere von Bauwerksschwingungen;
- Figur 6: ein erfindungsgemäßes faseroptisches Sensorkabel zur Messung von Dehnungen eines Messobjekts, insbesondere von Bauwerksdehnungen;
- Figur 7: ein erfindungsgemäßes faseroptisches Sensorkabel im schematisierten Querschnitt; und
- Figur 8: ein erfindungsgemäßes faseroptisches Sensorkabel im schematisierten Längsschnitt.

### Detaillierte Beschreibung der Figuren

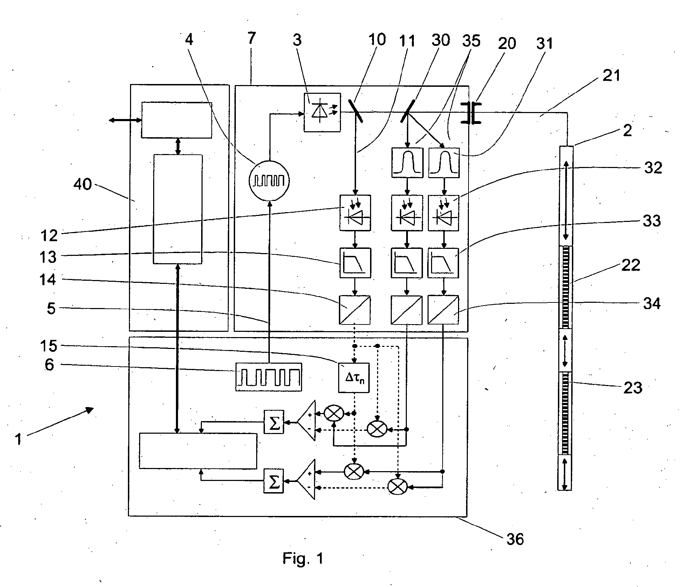

Die in Figur 1 dargestellte Messeinrichtung umfasst zunächst ein Pseudo-Random-Noise-Raman-Rückstreu-Reflektometer 1 mit sequentieller Ermittlung von Messdatensätzen der einzelnen Orte entlang eines faseroptischen Sensorkabels 2. Das Reflektometer 1 umfasst eine Sendestufe 7 mit einer Lichtquelle 3 (typischerweise einem Dauerlichtlaser oder einer Laserdiode) und einem HF-Modulator 4 zur Modulation des von der Lichtquelle 3 abgegebenen Lichtes mit einem Modulationssignal 5 von einem Codegenerator 6. Der Codegenerator 6 erzeugt dabei das Modulationssignal 5 entsprechend dem verwendeten Messprinzip. Bei dem dargestellten Beispiel einer Pseudo-Random-Noise-Raman-Rückstreu-Messung erzeugt der Codegenerator 6 eine Sequenz einer vorbestimmten Anzahl von unterschiedlich langen Impulsen gleicher Amplitude, so dass das von der Lichtquelle 3 emittierte pulsmodulierte Licht in dem betrachteten Frequenzbereiche annähernd die Eigenschaften eines "weißen Rauschens" erfüllt. Aus dem Strahlengang der Lichtquelle 3 wird zunächst über einen ersten Strahlteiler 10 ein Teil des emittierten Lichtes ausgekoppelt und einer ersten Empfangsstufe 11 (optischer Referenzkanal) zugeführt mit einer geeigneten Photodiode 12 zur Umsetzung des optischen Signals in ein elektrisches Signal. Über einen Tiefpassfilter 13 wird das Signal vorgefiltert, verstärkt und das breitbandige Signal mit einem ersten Analog-Digitalwandler 14 digitalisiert. Dieses digitale Signal dient als Referenzsignal zur Korrelation mit einem Messsignal. Diese erste Empfangsstufe 11 dient als optischer Referenzkanal.

Über einen Anschluss 20 wird das von der Lichtquelle 3 emittierte Licht in ein faseroptisches Sensorkabel 2 eingespeist. Der in dem Sensorkabel 2 befindliche Lichtwellenleiter 21 weist bei dem dargestellten Beispiel zwei Gitter (FBG) 22 und 23 auf, die sich an unterschiedlichen Stellen entlang der Längsausdehnung des Lichtwellenleiters 21 bzw. des Sensorkabels 2 befinden. Die aus dem Sensorkabel 2 reflektierte Impulsfolge wird über einen weiteren wellenlängenselektiven Strahlteiler 30 oder einen Leistungsteiler gleichzeitig auf hier zwei weitere Empfangsstufen 35 zugeführt. Diese umfassen jeweils ein optisches Raman-Filter 31, eine Photodiode 32 zur Umsetzung des optischen Signals in ein elektrisches Signal, ein Tiefpassfilter 33 und einen weiteren Analog-Digitalwandler 34.

Das digitale Signal des A/D-Wandlers 14 wird einer Zeitverzögerungsstufe 15 zugeführt. Die Zeitverzögerung der Zeitverzögerungsstufe 15 ist variabel und wird zur Bildung eines Messdatensatzes für jeden Messort in der Glasfaser 2 sequentiell durchgeschaltet. Die digitalen Signale des A/D-Wandlers 14, der Zeitverzögerungsstufe 15 und der in diesem Beispiel beiden A/D-Wandler 34 werden einer Auswerteeinrichtung 36, z.B. in Form eines FPGAs und/oder digitalen Signalprozessors DSP, zugeführt, wo jeweils das Signal eines der weiteren A/D-Wandler 33 mit dem Signal des A/D-Wandlers 14 bzw. der Zeitverzögerungsstufe 15 korreliert wird zur Bildung eins Messdatensatzes, der einen nur vereinfacht dargestellten Auswerterechner 40, typischerweise einem Mikrocontroller, der überwiegend zur Kommunikation dient, übergeben wird zur Ausgabe eines ortsbezogenen Messwertes. Daraus ergibt sich, dass die Messwerte für die beiden FBGs 22 und 23 nur nacheinander nach dem vollständigen Aussenden und Empfangen einer vollständigen Impulssequenz ermittelt und ausgegeben werden können. Daraus ergibt sich weiterhin, dass die Wiederholrate einer vollständigen Messwertausgabe für das verwendete Sensorkabel 2 im Wesentlichen von der Anzahl der Ortspunkte des Refektometeres sowie von der Anzahl der in dem Sensorkabel 2 angeordneten FPGs 22 und 23 abhängt und damit, wie bereits oben erläutert, bei typischen praktischen Anwendungen im Bereich von mehr als einer halben Minute liegt. Im Umkehrschluss bedeutet dies, dass nur sehr langsam ablaufende zeitabhängige Veränderungen der Messwerte erfasst werden können. Bei den in der Vergangenheit besonders häufig eingesetzten Temperaturmessungen, insbesondere zur Brandschutzüberwachung, war eine solche zeitliche Auflösung völlig ausreichend, da beispielsweise der Ausbruch eines Vollbrands bei einem Kfz ca. 3 min dauert.

Die Photodioden 32 messen die integrale spektrale Intensität des rückgestreuten Lichtes hinter dem Raman-Filter 31. Bei einer Längenänderung des FBG 22 oder 23 ändert sich die Intensität des Stokes-Lichtes, weil sich die Intensität der Bragg-Reflexion am Gitter aufgrund der spektralen Verteilung des als intrinsischer Lichtquelle genutzten Stokes-Lichtes der Raman-Streuung ändert. Ferner wird durch die Filtereigenschaft des Raman-Filters 31 dieser Effekt verstärkt.

Die Intensitätsänderung kann einer spektralen Verschiebung der Bragg-Wellenlänge und damit einer Längenänderung des FBG 22 oder 23 zugeordnet werden.

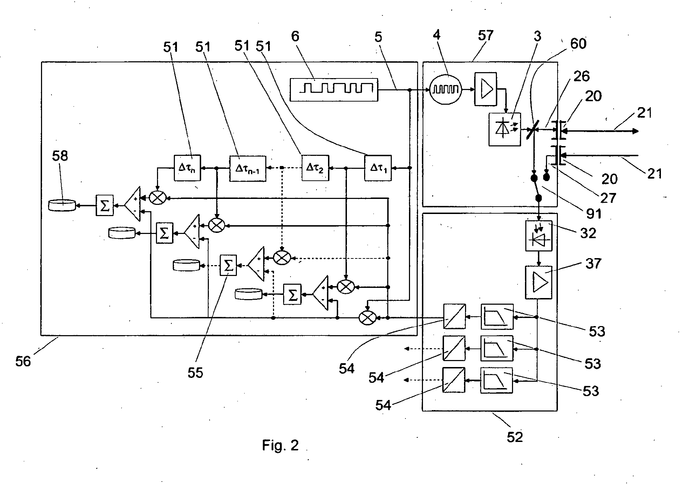

Bei der in Figur 2 gezeigten erfindungsgemäßen Messeinrichtung wird ebenfalls eine Sendestufe 57 verwendet mit einer Lichtquelle 3 (typischerweise einem Dauerlichtlaser oder einer Laserdiode) und einem HF-Modulator 4 zur Modulation des von der Lichtquelle 3 abgegebenen Lichtes mit einem Modulationssignal 5 von einem Codegenerator 6. Der Codegenerator 6 erzeugt dabei das Modulationssignal 5 entsprechend dem verwendeten Messprinzip. Bei dem dargestellten Beispiel einer Pseudo-Random-Noise-Raman-Rückstreu-Messung erzeugt der Codegenerator 6 eine Sequenz einer vorbestimmten Anzahl von unterschiedlich langen Impulsen gleicher Amplitude, so dass das von der Lichtquelle 3 emittierte frequenzmodulierte Licht in dem betrachteten Frequenzbereiche annähernd die Eigenschaften eines "weißen Rauschens" erfüllt.

Anders als im Stand der Technik wird bei einer besonders kostengünstigen Ausführung das Modulationssignal 5 von dem Codegenerator 6 nicht nur dem HF-Modulator 4 zugeführt, sondern auch unmittelbar einer digitalen Auswerteeinrichtung 56. Zur Kompensation von Fehlern durch Artefakte, die von der Lichtquelle 3 erzeugt werden, kann es auch zweckmäßig sein, das Modulationssignal über einen Referenzkanal, wie in Figur 1 gezeigt, bereitzustellen. In der Auswerteeinrichtung 56 wird das Modulationssignal 5 auf eine Anzahl von n Zwischenspeichern 51 gegeben, deren Anzahl n der Anzahl der zur Erfassung von Messwerten heranzuziehenden Orte entlang des Sensorkabels 2 (in Figur 2 nur angedeutet) entspricht. Dementsprechend wird das von der Lichtquelle 3 emittierte Sequenz von pulsmoduliertem Licht, wiederum gegebenenfalls über einen Anschluss 20, in das Sensorkabel 2 eingestrahlt. Weiterhin sind Strahlteiler 60 zum Auskoppeln des jeweiligen rückgestreuten Signals vorgesehen.

Es ergibt sich gegenüber dem Stand der Technik eine große Kostenersparnis, da eine Vielzahl von analogen HF-Komponenten, wie Mischer, Integratoren, Multiplizierer, entfallen.

Das dargestellte System umfasst beispielsweise drei Messkanäle, von denen einer Dehnung und Biegung des Lichtwellenleiters 21 über das Stokes-Signal erfasst, ein weiterer die Temperatur durch Auswertung des Antistokes-Lichtes in Verbindung mit dem ersten Messkanal, der dritte Kanal kann beispielsweise zur Korrosionsmessung über eine Änderung des Brechungsindexes eines freigelegten Abschnittes des Lichtwellenleiters 21 erfasst werden, die sich messtechnisch wie eine Änderung des Gitters darstellt.

Bei der Verwendung von FBGs wird das rückgestreute Signal aus dem Sensorkabel 2 einheitlich einer Empfangsstufe 52 zugeführt (der Übersichtlichkeit halber sind die Photodioden 32 als eine dargestellt). Diese umfasst ebenfalls ein optisches Raman-Filter (hier nicht dargestellt), und das ramangefilterte Spektrum der rückgestreuten Strahlung wird durch eine Photodiode 32 in ein elektrisches Signal umgewandelt. Das elektrische Signal mit voller Bandbreite wird über einen Tiefpassfilter 53 gefiltert zur Entfernung von Oberwellen, Aliasingfehlern und dergleichen, mit Hilfe eines Verstärkers 37 verstärkt und einem A/D-Wandler 54 zugeführt. Das elektrische Signal kann beispielsweise zur Bildung mehrere Messkanäle auch über mehrere Tiefpassfilter 53 mit jeweils einem nachgeschalteten A/D-Wandler 54 weiterverarbeitet werden. Ein solcher zusätzlicher Messkanal kann als Referenzkanal eingesetzt werden, um Störungen aus dem eingestrahlten Signal aus dem rückgestreuten Signal herausrechnen zu können, oder um das Sensorkabel 2 im laufenden Betrieb korrigieren zu können.

Soll zusätzlich ein LPG-Gittersensor zum Einsatz kommen, so muss zusätzlich zum rückgestreuten Signal auch das transmittierte LPG-Signal aus dem Sensorkabel 2 ausgewertet werden. Die Auswertung kann zeitgleich oder zeitlich nacheinander erfolgen. Bei einer gleichzeitigen Messung muss zusätzlich das transmittierte Signal aus dem Sensorkabel detektiert und mit Hilfe eines spektrometrischen Verfahrens ausgewertet werden. Die temporäre Auswertung des rückgestreuten Signals bzw. des transmittierten LPG-Signals kann z.B. mit Hilfe eines faseroptischen Schalters 91 relativ einfach erzielt werden. Der Schalter koppelt das auszuwertende Signal in den gewünschten Messkanal (optischer Filter plus Photodiode).

Für die Auswertung des aus der Faser rückgestreuten Signals wird das breitbandige digitale Signal von dem A/D-Wandler 54 auf n Korrelationsstufen gegeben und dort jeweils mit dem verzögerten Signal aus dem zugehörigen Zwischenspeicher 51 korreliert. Das Signal kann dann noch in an sich bekannter Form einer Mittelwertbildungseinrichtung 55 zugeführt werden und dann als Messdatensatz in einem Ausgangsbuffer 58 zwischengespeichert und an einen Auswerterechner zur Bildung und Darstellung von ortsaufgelösten Messwerten ausgegeben werden. Der in der Beschreibung zu Figur 1 erwähnte Auswerterechner (Mikrocontroller 40 ist in Figur 2 nicht dargestellt.

Gemäß dem erfindungsgemäßen Verfahren können physikalische Größen räumlich verteilt und/oder entfernt unter Auswertung von aus wenigstens einem Lichtwellenleiter rückgestreuter optischer Signale gemessen werden, wobei das elektrische digitale Modulationssignal 5, das zur Erzeugung eines modulierten Laserlichts dient, einer digitalen Auswerteeinrichtung 56 zugeführt wird, wobei das Modulationssignal 5 einer Vielzahl von n Zwischenspeichern 51 mit jeweils einer vorbestimmten Zeitverzögerung zugeführt wird, und das von dem wenigstens einen Lichtwellenleiter 21 eines Sensorkabel 2 rückgestreute Signal in einem Tiefpassfilter 53 gefiltert und breitbandig einem A/D-Wandler 54 zugeführt und in ein digitales Antwortsignal umgesetzt wird. Das digitale Antwortsignal wird n-fach mit dem verzögerten Modulationssignal aus den n Zwischenspeichern 51 zur Bildung von n Messdatensätzen korreliert und mit Hilfe eines Addierers 55 aufsummiert, und die n Messdatensätze werden an einen Auswerterechner zur Auswertung unmittelbar oder über eine Zwischenspeicherung 58 übergeben zur Bildung und Ausgabe ortsaufgelöster Messwerte.

Die erfindungsgemäße Messeinrichtung und das erfindungsgemäße Verfahren erlauben es, die Rückstrahlungen aller Messorte in einem einzigen Durchlauf der Pseudo-Noise-Sequenz auszuwerten und somit die Messwerte für alle Messorte parallel zu ermitteln mit nur einer einzigen Messeinrichtung. Damit lässt sich der wirtschaftlich sinnvolle Einsatzbereich von solchen optischen Messverfahren unter Auswertung von aus einem Lichtwellenleiter rückgestreuter optischer Signale wesentlich erweitern. Zusätzlich besteht die Möglichkeit, das transmittierte Signal von LPG-Gittersensoren mit dem gleichen Detektionssystem zu messen und auszuwerten.

Bei Anwendung des erfindungsgemäßen Verfahrens mit einer erfindungsgemäßen Messeinrichtung ergibt sich eine Messdauer wie folgt: bei beispielsweise einer Pseudo-Noise-Sequenz mit M = 100.000 Pulsen, einer Pulsbreite von 10 ns, entsprechend einer Ortsauflösung von 1 m, und einer Messtrecke von 5 km beträgt die Messzeit für alle Messorte 1 ms. Bei einer Pseudo-Noise-Sequenz mit M = 200 Pulsen, einer Pulsbreite von 1 µs, entsprechend einer Ortsauflösung von 100 m, und einer Messtrecke von 1 km beträgt die Messzeit für alle Messorte nur 0,2 ms. Daraus ist leicht erkennbar, dass mit dem erfindungsgemäßen Verfahren und Vorrichtung im Gegensatz zum Stand der Technik nunmehr auch schnelle Ereignisse, wie Schwingungen an einem Bauwerk, z.B. mit 5 kHz bei dem zweiten Beispielswert, ohne zusätzlichen apparativen Aufwand erfasst werden können.

Auch wenn das erfindungsgemäße Verfahren und die erfindungsgemäße Messeinrichtung hier im Zusammenhang mit der besonders bevorzugten Anwendung der Pseudo-Noise-Technologie beschrieben wurde, sind das Verfahren und die Messeinrichtung auch auf andere Verfahren zur räumlich verteilten und/oder entfernten Messung von physikalischen Größen unter Auswertung von aus wenigstens einem Lichtwellenleiter 21 rückgestreuter optischer Signale anwendbar, insbesondere solchen, bei denen eine frequenz- oder pulsmodulierte Lichtquelle 3 (Dauerstrichlaser, CW-Laser) zum Einsatz kommt.

Erfindungsgemäß ist es besonders vorteilhaft, die Modulation einer Lichtquelle 3 mit schmalbandigem Emissionsspektrum so vorzunehmen, dass in dem Lichtwellenleiter 21 eine spontane Raman-Streuung angeregt wird, wie dies an sich grundsätzlich bekannt ist. Die Besonderheit des erfindungsgemäßen Verfahrens ist, den Lichtwellenleiter 21 mit einem oder mehreren Fasergittern 22, 23 zu versehen, und die durch die Lichtquelle 3 angeregte spontane Raman-Streuung als intrinsische Strahlungsquelle zur Bestimmung der Bragg-Wellenlängenverschiebung an den Fasergittern 22, 23 zu verwenden. Da die spektrale Lage der Raman-Streuung lediglich materialabhängig ist, ist die Gitterperiode der FBG 22, 23 zweckmäßig an eine Flanke des Stokes-Raman-Rückstreulicht anzupassen, um eine hinreichende Empfindlichkeit bzw. ein möglichst großes Signal-/Rauschverhältnis der Fasergitter 22, 23 zu erhalten. Bevorzugt weist das eine oder die mehreren Fasergitter 22, 23 eine Gitterperiode von etwa 300 nm bis etwa 600 nm, vorzugsweise 500 nm bis 550 nm auf. Allerdings ist darauf zu achten, dass die eingestrahlte Pumplichtleistung nicht so groß wird, dass anstelle der spontanen Raman-Rückstreuung eine induzierte Raman-Reflexion, auch als Raman-Verstärkung bezeichnet, entsteht und damit der Lichtwellenleiter 21 zu einem Resonator für die Lichtquelle 3 wird. Die Empfindlichkeit kann auch durch eine gröbere Ortsauflösung und/oder den Einsatz eines optischen Verstärkers in der Empfangsstufe erhöht werden. Insbesondere bei Einsatz eines optischen Verstärkers ist es auch möglich, die Bragg-Wellenlängenverschiebung visuell mit einem Gitterspektrometer und einer LCD-Anzeige darzustellen.

Erfindungsgemäß bevorzugt erfolgt die Bestimmung der Bragg-Wellenlängenverschiebung durch die Auswertung der Intensitätsänderung der Stokes-Amplitude des rückgestreuten Raman-Lichtes und oder durch Auswertung der Intensitätsänderung der Stokes-Amplitude des transmittierten Raman-Lichtes. Besonders vorteilhaft ist es auch, an einem oder mehreren Orten entlang des Lichtwellenleiters 21, vorzugsweise benachbart zu dem oder den mit einem Fasergitter 22, 23 versehenen Orten eine Bestimmung der Temperatur durch Auswertung des rückgestreuten Raman-Lichtes, und mit den so erhaltenen Informationen über Temperatur und Bragg-Wellenlängenverschiebung eine rechnerische Korrektur der Querempfindlichkeit für die Messung von Temperatur und/oder Dehnung oder Biegung vorzunehmen. Dabei kann die Temperaturkompensation der Wellenlängenverschiebung durch direkte Subtraktion der Antistokes-Amplitude eines Nachbarortes erfolgen. Weiterhin kann eine Korrektur von spektralen Auslöschungseffekten der durchlaufenen Gitter 22, 23 erfolgen.

Erfindungsgemäß ist es damit möglich, ohne zusätzlichen apparativen Aufwand ein und denselben Lichtwellenleiter 21 sowohl für eine Raman-Temperaturmessung, als auch für die Messung von mechanischen Größen, wie Dehnung oder Biegung des Lichtwellenleiters 21, über die Bragg-Wellenlängenverschiebung zu messen. Ist der Lichtwellenleiter 21 jedoch so angeordnet, dass eine mechanische Beanspruchung durch Dehnung oder Biegung nicht relevant ist, kann die Bragg-Wellenlängenverschiebung auch zur Kalibrierung der Raman-Temperaturmessung herangezogen werden, da sich die Gitterperiode von FBGs sich natürlich auch durch thermische Ausdehnung des Lichtwellenleiters 21 verändert. Dadurch ist es möglich, ohne zusätzlichen Lichtwellenleiter und entsprechende zusätzliche Messeinrichtungen eine Messanordnung z.B. unter ungünstigen Umgebungsbedingungen bzw. schwierigen Montageorten, wie Erdöl-Bohrlöchern, einzusetzen und durch die Möglichkeit der Kalibrierung eine lange Nutzungsdauer zu erhalten, ohne redundante Messeinrichtungen für die gelegentliche Nachkalibrierung vorsehen zu müssen. Andererseits ist es möglich, bei der vorrangigen Messung von mechanischen Parametern wie Dehnung und Biegung die Temperaturabhängigkeit Gitterperiode der Fasergitter 22, 23 und damit der Bragg-Wellenlängenverschiebung durch die gleichzeitige Raman-Temperaturmessung zu kompensieren, und somit eine sehr genaue Messung auch bei schwankenden Ortstemperaturen zu erhalten.

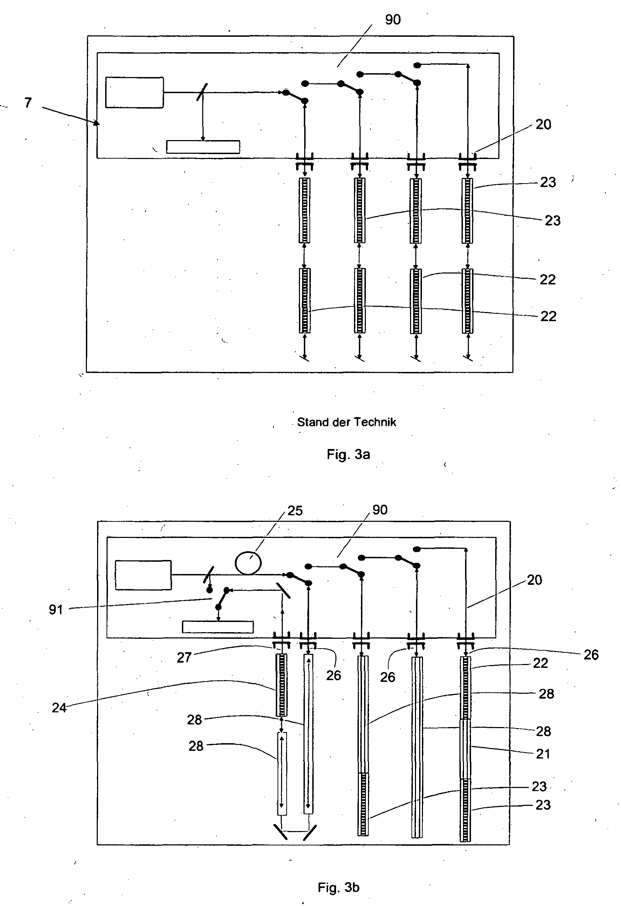

Ein Beispiel für eine Anordnung einer Messeinrichtung für den Anschluss von drei unterschiedlichen Sensortypen (FBG (22, 23), LPG 24 und örtlich verteilter Sensor 28) zeigt Figur 3b. Das Laserlicht der Sendestufe durchläuft wie dargestellt eine Vorlauffaser und wird anschließend mit Hilfe eines integrierten faseroptischen Schalters 90 optional in einen der vier dargestellten Sensorstrecken eingekoppelt. In drei Messkanälen befinden sich zwei FBG-Fasergitter (22, 23), ein örtlich verteilter Sensor 28 sowie eine kombinierte Sensoranordnung (22, 28). Für diese drei Messkanäle wird eine Reflektionsmessung in Kombination eines faseroptischen Reflektometers angewendet, indem das Licht des Rückstreukanals 26 wie oben erwähnt ausgewertet wird. Mit Hilfe eines zweiten faseroptischen Schalters 91 besteht zusätzlich die Möglichkeit, die Sensorkombination bestehend aus LPG-Sensor 24 und örtlich verteiltem Sensor 28 auszuwerten. Das rückgestreute Licht des örtlich verteilten Sensors 28 wird im Rückstreukanals 26 erfasst und reflektometrisch ausgewertet. Das Transmissionslicht des LPG-Sensors 24 dagegen wird im Transmissionskanals 27 geführt und kann mit den faseroptischen Schaltern 91 temporär auf einen opto-elektronischen Kanal (Filter und Photodetektor) der Auswerteinheit geschaltet und ausgewertet werden.

Ein weiteres Anwendungsbeispiel ist die Messung von Dehnung und Temperatur hinsichtlich der Überwachung des Belastungsverhaltens von Hochspannungsseilen. Besonders vorteilhaft ist in diesen Zusammenhang die Verwendung von einer Messvorrichtung, um Querempfindlichkeiten gezielt zu korrigieren und das Messsystem kostengünstig zu realisieren.

Besonders vorteilhaft in diesem Zusammenhang ist ein erfindungsgemäßes faseroptisches Sensorkabel 2, enthaltend wenigstens einen Lichtwellenleiter 21, das wenigstens einen Messabschnitt zur gleichzeitigen Messung von mehr als einer physikalischen Größe aufweist, wobei innerhalb des wenigstens einen Messabschnitts ein optisches Fasergitter 22 angeordnet ist, und wobei das Fasergitter 22 innerhalb des Messabschnitts so angeordnet ist, dass der in Richtung zu einem Anschluss 20 für eine Auswerteeinrichtung 36, 56 liegende proximale Teil des Messabschnitts ohne Fasergitter entlang des Sensorkabels 2 gleich lang oder länger ist, als der entfernter liegende distale Teil des Messabschnitts ohne Fasergitter. Durch diese Maßnahme lässt sich ein erfindungsgemäßes Sensorkabel 2 so betreiben, dass die spontane Raman-Streuung als intrinsische Strahlungsquelle zur Bestimmung der Bragg-Wellenlängenverschiebung an den Fasergittern 22, 23 verwendet werden kann, da durch die erfindungsgemäße Anordnung der Fasergitter 22, 23 innerhalb eines Messabschnittes Auslöschungseffekte minimiert und damit das Signal-/Rauschverhältnis verbessert wird. Besonders vorteilhaft ist es bezüglich der Empfindlichkeit, wenn die Länge des Fasergitters in Längsrichtung des Kabels annähernd der Länge des Messabschnitts entspricht. Die Empfindlichkeit kann auch durch eine größere Ortsauflösung und/oder den Einsatz eines optischen Verstärkers verbessert werden.

Für die Verwendung des erfindungsgemäßen Sensorkabels 2 mit der erfindungsgemäßen gleichzeitigen Verarbeitung der Rückstreusignale aller Messorte ist es zur Identifizierung der einzelnen FBGs über die spektrale Verteilung zweckmäßig, wenn die Fasergitter 22, 23 jeweils eine voneinander unterschiedliche Gitterperiode aufweisen. Der geeignet Unterschied zwischen den einzelnen Gitterperioden liegt dabei je nach Zahl der FBGs vorteilhaft zwischen 1 nm und 5 nm, vorzugsweise im Bereich von etwa 3 nm bis 4 nm. Zweckmäßig weisen dabei die Messabschnitte voneinander jeweils den gleichen Abstand auf.

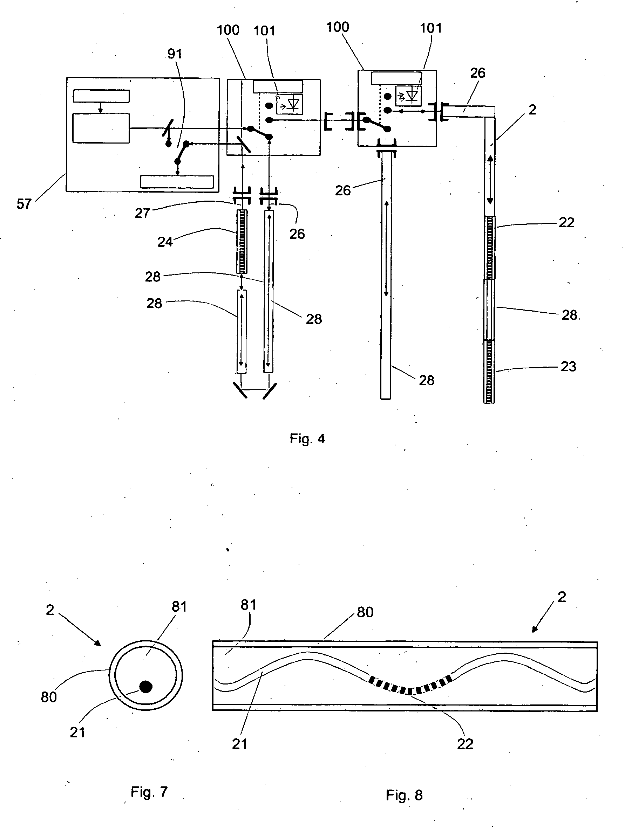

In den Figuren 7 und 8 ist ein erfindungsgemäßes faseroptisches Sensorkabel 2 im vereinfachten Längs- und Querschnitt dargestellt. Das Sensorkabel 2 umfasst dabei eine Hülle 80, vorzugsweise in Form eines dünnen Edelstahlrohres. In der Hülle 80 befindet sich der Lichtwellenleiter 21. Der Lichtwellenleiter hat einen kleineren Durchmesser als der Innendurchmesser der Hülle 80, so dass der Lichtwellenleiter 21 in der Hülle 80 Spiel hat. Der Zwischenraum zwischen Lichtwellenleiter 21 und Hülle 80 ist zweckmäßig mit einem Gel 81 zur Fixierung des Lichtwellenleiters 21 gefüllt, um eine Beschädigung des Lichtwellenleiters 21 durch Scheuern an der Hülle 80 zu vermeiden. Weiterhin dient das Gel 81 zur Wärmeleitung von der Hülle 80 zu dem Lichtwellenleiter 21. Der Lichtwellenleiter 21 weist ein oder mehrere Fasergitter 22, 23 auf, wie weiter oben beschrieben. Der Lichtwellenleiter 21 hat in der Hülle 80 eine größere Länge als die Hülle 80. Die Mehrlänge des Lichtwellenleiters 21 gegenüber der Hülle 80 beträgt etwa 0,05 % bis 0,3 %, vorzugsweise um 0,1 % bis 0,2 %. Die Mehrlänge sollte zumindest ausreichend sein, um eine unterschiedliche thermische Ausdehnung von Lichtwellenleiter 21 und Hülle 80 im Temperaturbereich zwischen -25 °C und +60 °C so zu kompensieren, dass der Lichtwellenleiter 21 in der Hülle 80 nicht unter Spannung kommt. Die Darstellung in den Figuren 7 und 8 ist zur Verdeutlichung nichtmaßstäblich übertrieben. Durch die Mehrlänge in der Hülle 80 lassen sich unterschiedliche Ausdehnungskoeffizienten von Hüllen 80 und Lichtwellenleiter 21 ausgleichen derart, dass bei einer thermischen Dehnung der Hülle 80 der Lichtwellenleiter nicht unter Spannung gerät, was eine Temperaturänderung vortäuschen würde, wenn der oder die Fasergitter zur Temperaturmessung herangezogen werden.

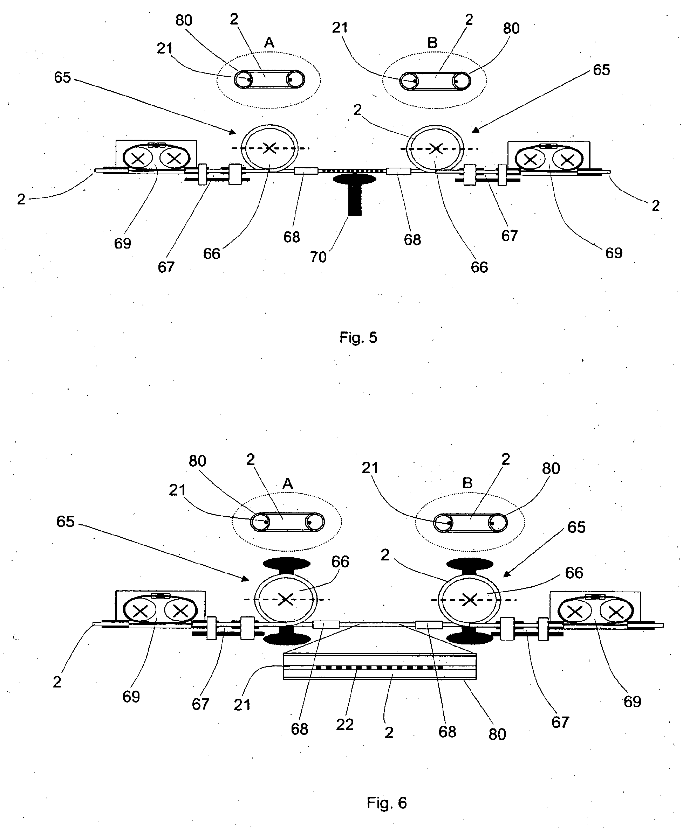

Für die Messung von Dehnungen oder Biegungen, insbesondere Biegeschwingungen, an Bauwerken ist eine erfindungsgemäße Weiterbildung eines faseroptischen Sensorkabels 2 gemäß Figur 6 besonders vorteilhaft. Dazu ist das Sensorkabel 2 mit einer zweiteiligen Zugvorrichtung 65 versehen, die mit einem Messobjekt (nicht dargestellt) fest verbindbar ist. Die Zugvorrichtung 65 umfasst eine Wickeleinrichtung 66, um das Sensorkabel 2 so aufzuwickeln, dass der Lichtwellenleiter 21 entlang einer zu untersuchenden Messtrecke an der Hülle 80 zur Anlage kommt, so dass sich eine durch das Messobjekt auf die Hülle 80 des Sensorkabels 2 aufgeprägte Längenänderung auf den Lichtwellenleiter 21 überträgt; siehe Einzelheit (A) und (B) in Figur 5 und 6. Die Anzahl der Windungen auf der Wickeleinrichtung 66 beträgt etwa fünf. Dabei wird die Hülle 80 zwischen den Wickeleinrichtungen 66 gestreckt, so dass die Mehrlänge des Lichtwellenleiters 21 kompensiert wird.

Die zweiteilige Zugvorrichtung 65 umfasst eine Einrichtung 67 zur Vorspannung des Sensorkabels derart, dass die Hülle 80 wenigstens soweit gestreckt werden kann, dass der Lichtwellenleiter 21 innerhalb der Hülle 80 elastisch vorgespannt ist. Dadurch lassen sich Dehnungen und Stauchungen des Bauwerks messen. Der Bereich des Lichtwellenleiters 21 mit dem Fasergitter 22 innerhalb der Messtrecke ist vergrößert herausgehoben dargestellt. Die Einrichtung 67 zur Vorspannung kann beispielsweise durch ein Paar Halterungen mit Gewindespindeln gebildet werden. Weiterhin können Führungsklemmen 68 vorgesehen sein und ein erfindungsgemäßer Sensorkabelabschnitt kann über Spleißstellen, die in bekannter Form in Spleißkassetten 69 untergebracht sind, in ein Lichtwellenleiterkabel eingesetzt sein.

Dazu wird das erste Ende des Sensorkabels 2 in der ersten Zugvorrichtung 65 mit einer Klemmvorrichtung eingelegt und fixiert. Das andere, lose Ende der Hülle 80 wird ebenfalls fixiert (z.B. durch plattes Röhrchen, falls keine Transmissionsmessung benötigt wird). Anschließend werden mehrere Lagen der Hülle 80 um die erste Zugvorrichtung 65 gewickelt. Der Lichtwellenleiter 21 wird dabei gespannt und legt sich gleichmäßig an die Innenseite der Hülle 80 an. Das Sensorkabel 2 wird nun in der zweiten Zugvorrichtung 65 aufgewickelt. Der vorgespannte Lichtwellenleiter 21 legt sich wiederum gleichmäßig an die Innenseite der Hülle 80 des Sensorkabels 2 an. Anschließend erfolgt die Fixierung mit einer zweiten Klemmvorrichtung.

Mit der Zugvorrichtung 65 besteht nun die zusätzliche Möglichkeit, den Arbeitsbereich des Sensorkabels 2 als Dehnungssensor so zu berücksichtigen, dass keine unzulässige Stauchungen und Dehnungen an der Hülle 80 auftreten können.

In Figur 5 ist eine ähnliche Anordnung dargestellt, die jedoch zur Messung von Biegungen des Bauwerks, insbesondere von Biegeschwingungen, geeignet ist. Dabei ist das Sensorkabel 2 ebenfalls mit einer zweiteiligen Zugvorrichtung 65 versehen ist, die mit einem Messobjekt fest verbindbar ist. Die Zugvorrichtung 65 umfasst eine Wickeleinrichtung 66 wie oben beschrieben, wobei die Wickelvorrichtung 66 jedoch nicht fest mit dem Messobjekt verbunden ist. Mit der Wickelvorrichtung 66 ist das Sensorkabel 2 so aufgewickelt, dass der Lichtwellenleiter 2 entlang einer zu untersuchenden Messtrecke an der Hülle 80 zur Anlage kommt, so dass sich eine durch ein mit dem Messobjekt verbundenes Koppelelement 70 auf die Hülle des Sensorkabels 2 aufgeprägte Biegung auf den Lichtwellenleiter 21 überträgt. Mit dieser Einrichtung lassen sich effizient Schwingungen, beispielsweise an Brückenbauwerken, erfassen.

Für die Schwingungsmessung soll vorzugsweise der LPG-Sensor verwendet werden, da aufgrund der größeren Längsabmessungen gegenüber FBG-Sensoren eine einfachere Positionierung des Koppelelementes 70 besteht. Die genaue Positionierung des LPG-Sensors in der Hülle 80 kann mit Hilfe hochauflösender Refektometer (z.B. optische Weißlichtreflektormeter) ermittelt und auf der Hülle markiert werden, die den Einbau des Koppelelementes 70 zusätzlich vereinfacht.

Ein Vorspannen des Lichtwellenleiters 21 im Bereich der Messstrecke kann auch durch ein Koppelelement mit großem Krümmungsradius erfolgen, das gegen das gerade gespannte Sensorkabel 2 gedrückt wird (nicht dargestellt).

Es ist auch möglich, einen nackten Lichtwellenleiter 21 einzusetzen und die Zugvorrichtung mit der Spleißkassette 69 innerhalb eines Gehäuses anzuordnen, so dass die Komponenten gut geschützt sind und eine kompakte Anordnung erhalten wird. Zwischen Lichtwellenleiter 21 (Faser) und Innenseite der Hülle 80 kann ein Schutzschlauch im Bereich der Spleißkassette 69 eingesetzt sein, der eine mögliche mechanische Beschädigung des Lichtwellenleiters durch die Hülle 80 verhindert.

Einzelne Elemente eines solchen erfindungsgemäßen Sensorkabels 2 können als werkstattvormontierte Komponenten ausgebildet sein.

Diese erfindungsgemäßen Einrichtungen lassen sich besondere günstig mit den weiter oben beschriebenen erfindungemäßen Verfahren und unter Verwendung der beschriebenen erfindungsgemäßen Messeinrichtung benutzen.

Erfindungsgemäß vorteilhaft ist, ein Meßsystem mit einer Messeinrichtung wie oben beschrieben und mehreren faseroptischen Sensorkabeln 2 wie oben angegeben mit einer Anzahl von faseroptischen Feldschaltern 100 einzusetzen. Eine solche Anordnung ist schematisch in Figur 4 dargestellt. Im Gegensatz zu der in Figur 3a dargestellten Anordnung nach dem Stand der Technik, bei dem ein in die Messeinrichtung 1 integrierter faseroptischer Schalter 90 zur Verbindung jeweils eines von mehreren faseroptischen Sensorkabeln 2 mit der Messeinrichtung vorgesehen ist, sind die erfindungsgemäßen faseroptischen Feldschalter 100 außerhalb der Messeinrichtung angeordnet. Einer der faseroptischen Feldschalter 100 ist mit der Messeinrichtung verbunden ist, ferner sind alle faseroptischen Feldschalter 100 untereinander und jeweils wenigstens mit einem faseroptischen Sensorkabel 2 verbunden. Jeder faseroptische Feldschalter enthält einen Dekodierer 101, der eine Steuerinformation aus der Verbindung mit einem anderen faseroptischen Feldschalter 100 oder der Messeinrichtung empfängt und so kann die von der Messeinrichtung angeforderte Aufschaltung eines bestimmten Sensorkabels 2 erfolgen. Die Steuerinformation kann intrinsisch durch Übersprecheffekte aus dem Sensorkabel 2 gewonnen oder über eine separate (nicht dargestellte) Steuerleitung zugeführt werden. Anders als beim Stand der Technik könne so weitverzweigte Sensorkabelnetze aufgebaut werden zu verhältnismäßig geringen Kosten, da Vorlaufkabel gemeinsam genutzt und daher nicht mehrfach verlegt werden müssen. Dadurch lassen sich beispielsweise Überwachungsnetze von entfernten Messwarten aus kostengünstig realisieren, z.B. für die Überwachung von Autobahnbrücken eines bestimmten Streckenabschnittes, wo bei Meßsystemen nach dem Stand der Technik die Kosten unwirtschaftlich hoch sind.

In Verbindung mit dem Pseudo-Noise-Verfahren kann die Messtrecke gezielt erfasst und somit die Messung insgesamt beschleunigt werden.

Besonders effizient lassen sich die erfindungsgemäße Verfahren oder Einrichtungen zur Schwingungsmessung oder und zur Dehnungsmessung an Bauwerken einsetzen. Durch die erweiterten Einsatzmöglichkeiten kann mit der Erfindung eine kostengünstige Überwachung von Bauwerken erfolgen und somit der Kostenaufwand für Unterhaltung und gegebenenfalls Sanierung von Bauwerken für den Nutzer reduziert werden, da einerseits unnötige Arbeiten, die allein aufgrund eines Ablaufs einer bestimmten Zeitspanne erfolgen, vermieden werden können, und andererseits eine frühzeitige Erkennung von Schäden, Verschleiß oder Korrosion eine weniger aufwendige und damit kostengünstigere Sanierung erlaubt.

Besonders effizient lassen sich erfindungsgemäße Verfahren oder Einrichtungen zur Dehnungsmessung und Temperaturmessung an Freileitungsseilen einsetzen. Durch die erweiterten Einsatzmöglichkeiten kann mit den erfindungsgemäßen Verfahren oder Einrichtungen eine kostengünstige Überwachung von Freileitungsseilen erfolgen und somit der Kostenaufwand für Investitionen für Monitoringsysteme deutlich reduzieren und die Korrektur hinsichtlich Querempfindlichkeiten deutlich vereinfachen.

## Patentansprüche

1. Verfahren zur räumlich verteilten und/oder entfernten Messung mindesten einer physikalischen Größe, vorzugsweise Dehnung, Schwingung oder Temperatur an ingenieurtechnischen Konstruktionen, unter Auswertung von aus wenigstens einem Lichtwellenleiter (21) rückgestreuten optischen Signalen,
wobei das Verfahren folgende Schritte umfasst:
• ein Codegenerator (6) erzeugt ein digitales elektrisches Modulationssignal (5), als eine Sequenz einer vorbestimmten Anzahl von unterschiedlich langen Impulsen gleicher Amplitude, wobei mit Hilfe eines HF-Modulators (4) die Sequenz einer Lichtquelle (3) zugeführt wird, zur Erzeugung eines modulierten Laserlichts, zur Einstrahlung dieses Laserlichts in den mindestens einen Lichtwellenleiter (21),
• das vom Codegenerator (6) erzeugte Modulationssignal (5) wird einer Auswerteeinrichtung (56) zugeführt, in welcher das Modulationssignal (5) mit n Zwischenspeichern (51), welche eine vorbestimmbare Zeitverzögerung erzeugen, n-fach verzögert wird,
• das aus dem wenigstens einen Lichtwellenleiter (21) rückgestreute, Eigenschaften von über die Messstrecke verteilt liegenden Ortspunkten enthaltende, optische Signal wird einer Photodiode (32) zugeführt, in welcher das optische Signal in ein breitbandiges, elektrisches Signal gewandelt wird,
- das elektrische Signal wird verstärkt, gefiltert (53) und einem A/D-Wandler (54) zugeführt und in ein breitbandiges, digitales Antwortsignal umgesetzt,
• das digitale Antwortsignal wird auf die Auswerteeinrichtung (56) gegeben, welche mindestens umfasst
- die n Zwischenspeicher (51), und n Korrelationsstufen und n Ausgangsbuffern (58),
- das digitale Antwortsignal wird mit dem verzögerten Modulationssignal aus den n Zwischenspeichern (51) n-fach korreliert zur Bildung von n Messdatensätzen der einzelnen Ortspunkte,
- die Messdatensätze werden einem Auswerterechner (40) zur Auswertung unmittelbar oder über eine Zwischenspeicherung übergeben zur Bildung und Ausgabe ortsaufgelöster Messwerte.

2. Verfahren nach Anspruch 1, **dadurch gekennzeichnet, dass** aus dem Strahlengang der Lichtquelle (3) über einen ersten Strahlteiler (10) ein Teil des emittierten Lichtes ausgekoppelt und einer ersten Empfangsstufe (11) zugeführt wird mit einer geeigneten Photodiode (12) zur Umsetzung des optischen Signals in ein elektrisches Signal, wobei die Empfangsstufe (11) mit einem Tiefpassfilter (13) einer digitalen Auswerteeinrichtung (36) verbunden ist zur Beseitigung hochfrequenter Störungen des von dem Lichtwellenleiter (21) rückgestreuten Signals.

3. Verfahren nach Anspruch 1, oder 2, **dadurch gekennzeichnet, dass** der wenigstens eine Lichtwellenleiter (21) verwendet wird:
- als Sensorfaser (28) oder
- als Lichtwellenleiter versehen mit einem Fibre-Bragg-Grating-Fasergitter (22, 23) oder,
- als Lichtwellenleiter versehen mit einem langperiodischen Fasergitter (24) oder
- als Sensorfaser (28) mit mehreren Fibre-Bragg-Grating-Fasergittern (22, 23),
wobei eine Pumplichtquelle mit schmalbandigem Emissionsspektrum verwendet wird, zur Erzeugung der spontanen breitbandigen Stoke-Raman-Streuung als intrinsische Strahlungsquelle, die zur Bestimmung der Bragg-Wellenlängenverschiebung an mindestens einem im Lichtwellenleiter eingesetzten Fibre-Bragg-Grating-Fasergitter (22, 23) und zur Erzeugung der Resonanzbedingung für die Kopplung der beteiligten Moden an dem langperiodischen Fasergitter (24) verwendet wird.

4. Verfahren nach Anspruch 3, **dadurch gekennzeichnet, dass** die Bestimmung der Bragg-Wellenlängenverschiebung durch die Auswertung der Intensitätsänderung der Stokes-Amplitude des rückgestreuten Raman-Lichtes erfolgt und
dass die Bestimmung der spektralen Verschiebung des Lichts der langperiodischen Fasergitter-Sensoren durch die Auswertung des Stokes-Raman-Spektrums des transmittierten Raman-Lichtes erfolgt.

5. Verfahren nach Anspruch 3, **dadurch gekennzeichnet, dass** an einem oder mehreren Orten entlang des Lichtwellenleiters (21), vorzugsweise benachbart zu dem oder den mit einem Fibre-Bragg-Grating-Fasergitter(n) (22, 23) versehenen Orten eine Bestimmung der Temperatur durch Auswertung des rückgestreuten Raman-Lichtes der Sensorfaser (28) erfolgt, und dass mit den so erhaltenen Informationen über Temperatur und Bragg-Wellenlängenverschiebung eine rechnerische Korrektur der Querempfindlichkeit für die Messung von Temperatur und/oder Dehnung oder Biegung erfolgt.

6. Verfahren nach Anspruch 5, **dadurch gekennzeichnet, dass** aus der Bestimmung der Temperatur durch Auswertung des rückgestreuten Raman-Lichtes von zu dem oder den Fibre-Bragg-Grating-Fasergitter(n) (22, 23) benachbarten Messorten eine rechnerische Korrektur zur Bestimmung der Bragg-Wellenlängenverschiebung erfolgt von Auslöschungseffekten an einem oder mehreren Fibre-Bragg-Grating-Fasergitter(n) (22, 23), die zwischen dem aktuell betrachteten Messort und einer oder mehreren innerhalb der Messeinrichtung angeordneten Empfangsstufen (11, 35, 52) gelegen sind.

7. Messeinrichtung zur Durchführung von räumlich verteilten und/oder entfernten Messungen von physikalischen Größen unter Auswertung von aus wenigstens einem Lichtwellenleiter (21) rückgestreuter optischer Signale, wobei die Messeinrichtung eine Strahlenquelle (3) zur Aussendung eines modulierten Laserlichtes und wenigstens einen Anschluss (20) für einen Lichtwellenleiter (21) umfasst, **dadurch gekennzeichnet,**
• **dass** der Lichtwellenleiter (21) mit einer das rückgestreute Licht in ein elektrisches Signal wandelnde Empfangsstufe (11, 35, 52) verbunden ist,
• **dass** ein ein digitales elektrisches Modulationssignal erzeugender Codegenerator (6) mit wenigstens einem analog/digitalem Auswertebauteil (34,54) verbunden ist, wobei das Modulationssignal zur Erzeugung eines modulierten Laserlichts dient,
• **dass** der Codegenerator (6) mit der digitalen Auswerteeinrichtung (36, 56) verbunden ist,
• **dass** die Empfangsstufe (11, 35, 52) mit einem Tiefpassfilter (13, 33) der digitalen Auswerteeinrichtung (36) verbunden ist zur Beseitigung hochfrequenter Störungen des von dem Lichtwellenleiter rückgestreuten Signals,
• **dass** das Tiefpassfilter (13, 33, 53) mit dem Eingang eines Analog-Digitalwandlers (14, 34, 54) verbunden ist zur breitbandigen Wandlung des demodulierten Rückstreusignals in ein digitales Antwortsignal, und
• **dass** die wenigstens eine digitale Auswerteeinrichtung (36, 56) n Korrelationsstufen umfasst zur Korrelation des digitalen Antwortsignals jeweils mit dem Modulationssignal zur Bildung von n Messdatensätzen,
• wobei die digitale Auswerteeinrichtung (36, 56) einen Ausgang umfasst zur Ausgabe der n Messdatensätze an einen Auswerterechner (40) zur Auswertung unmittelbar oder über einen Zwischenspeicher zur Bildung und Ausgabe ortsaufgelöster Messwerte.

8. Messeinrichtung nach Anspruch 7, **dadurch gekennzeichnet, dass** der Codegenerator (6) mit einer Anzahl n von in der digitalen Auswerteeinrichtung (36, 56) vorhandenen n Zwischenspeichern (15, 51) verbunden ist, die jeweils eine vorbestimmbare Zeitverzögerung erzeugen, und dass die digitale Auswerteeinrichtung (36, 56) eine Vielzahl von n Korrelationsstufen umfasst zur Korrelation des digitalen Antwortsignals jeweils mit dem verzögerten Modulationssignal aus der Vielzahl der n Zwischenspeicher (15, 51) zur Bildung von n Messdatensätzen.

9. Messeinrichtung nach Anspruch 7 oder 8, **dadurch gekennzeichnet, dass** die Messeinrichtung mehrere digitale Auswerteeinrichtungen (36, 56) aufweist, die sich jeweils in der Auswertung einer physikalischen Größe unterscheiden.

10. Messeinrichtung nach Anspruch 7 oder 9, **dadurch gekennzeichnet, dass** mindestens eine digitale Auswerteeinrichtung (36, 56) mit einer Einrichtung zur Ermittlung eines Referenzsignals zur Korrektur von systembedingten Signalstörungen ausgerüstet ist.

11. Messeinrichtung nach einem der Ansprüche 7 bis 10, **dadurch gekennzeichnet, dass** einer aus Sende- und Empfangsstufe bestehende Einrichtung (7, 57) eine optische Rückleitung (21, 27) angeschlossen ist, über welche von beiden Enden mindestens eines mit langperiodischem Fasergitter ausgestatteten Lichtwellenleiters (21,24) das transmittierte spektral bewertete Stokes-Raman-Signal zur vorgenannten Einrichtung (7, 57) gelangt und die vorgenannte Einrichtung (7,57) zur Auswertung nach einem spektrometrischen Verfahren ausgerüstet ist.

12. Faseroptisches Sensorkabel zu Verwendung in einer Messeinrichtung nach einem der Ansprüche 7 bis 11, **dadurch gekennzeichnet, dass** das Sensorkabel (2) umfasst entweder
- wenigstens einen Abschnitt, in dem ein Lichtwellenleiter (21) liegt,
- oder einen Lichtwellenleiter (21) versehen mit mindestens einem Temperatursensor-Messabschnitt (28),
- oder einen Lichtwellenleiter (21) versehen mit einem Abschnitt mit mindestens einem Fasergitter (22, 23, 24) unter Verwendung einer Vorlauflänge (25) zur Erzeugung des Raman-Stokes-Lichtes,
- oder eine kombinierte Anordnung von Abschnitten bestehend aus Temperatursensor-Messabschnitten (28) mit mindestens einem Fibre-Bragg-Grating-Fasergitter (22, 23)
- oder eine kombinierte Anordnung von Abschnitten bestehend aus Temperatursensor-Messabschnitten (28) mit mindestens einem langperiodischen Fasergitter (24).

13. Sensorkabel nach Anspruch 12, **dadurch gekennzeichnet, dass** das Sensorkabel (2) mit einer Hülle (80) und einer zweiteiligen Zugvorrichtung (65) versehen ist, die mit einem in einer ingenieurtechnischen Konstruktion angeordneten Messobjekt fest verbindbar ist, wobei die Zugvorrichtung (65) eine Wickeleinrichtung (66) umfasst, um das Sensorkabel (2) so aufzuwickeln, dass der Lichtwellenleiter (21) entlang einer zu untersuchenden Messtrecke an der Innenseite der Hülle (80) zur Anlage kommt, so dass sich eine durch das Messobjekt auf die Hülle (80) des Sensorkabels (2) aufgeprägte Längenänderung und/oder eine aufgeprägte Biegung auf den Lichtwellenleiter (21) überträgt.

14. Sensorkabel nach Anspruch 13, **dadurch gekennzeichnet, dass** die zweiteilige Zugvorrichtung (65) eine Einrichtung zur Vorspannung des Sensorkabels (2) derart umfasst, dass die Hülle (80) wenigstens soweit gestreckt werden kann, dass der Lichtwellenleiter (21) innerhalb der Hülle (80) elastisch vorgespannt ist.

## Claims

1. Method for the spatially distributed and/or remote measurement of at least one physical quantity, preferably an expansion, oscillation or temperature, in technical-engineering constructions by using optical signals that are backscattered from at least one fiber-optic cable (21),
wherein the method comprises the following steps:
• a code generator (6) generates a digital electrical modulation signal (5) as a sequence of a certain number of pulses of the same amplitude with different lengths, wherein, with the help of an HF modulator (4), the sequence is supplied to a light source (3) for the purpose of generating a modulated laser light for launching of this laser light into the at least one fiber-optic cable (21),
• the modulation signal (5) generated by the code generator (6) is supplied to an evaluation unit (56), in which the modulation signal (5) is delayed n times by n buffer memories (51) which create a certain time delay,
• the optical signal which is backscattered from the at least one fiber-optic cable (21) and contains properties of locations that are distributed across the measuring distance is supplied to a photodiode (32), in which the optical signal is transformed into a broadband electric signal,
- the electrical signal is amplified, filtered (53) and supplied to an A/D converter (54) and transcribed into a broadband digital response signal,
• the digital response signal is supplied to the evaluation unit (56), which at least comprises
- the n buffer memories (51) and n correlation stages and n output buffers (58),
- the digital response signal is correlated n times with the delayed modulation signal from the buffer memories (51) for the purpose of creating measurement data sets of the individual locations, - the measurement data is transferred to an evaluation computer (40) for performing an evaluation directly or via a buffer memory for the purpose of creating and outputting spatially resolved measurement values.

2. Method according to claim 1, **characterized in that** a part of the emitted light is decoupled from the beam path of the light source (3) via a first beam splitter (10) and is supplied to a first receiving stage (11) with a suitable photodiode (12) for conversion of the optical signal into an electrical signal, wherein the receiving stage (11) is connected to a low-pass filter (14) of a digital evaluation unit (36) for removing high-frequency interferences of the signal that is backscattered by the fiber-optic cable (21).

3. Method according to claim 1 or 2, **characterized in that** the at least one fiber-optic cable (21) is used:
- as a sensor fiber (28) or
- as a fiber-optic cable which is provided with a fiber Bragg grating (22, 23) or
- as a fiber-optic cable which is provided with a long-periodic fiber grating (24) or
- as a sensor fiber (28) with several fiber Bragg gratings (22, 23),
wherein a pumped light source with a narrow-band emission spectrum is used to generate the spontaneous broadband Stoke Raman scattering as an intrinsic radiation source which is used for determining the Bragg wavelength shift at least one fiber Bragg grating (22, 23) that is used in the fiber-optic cable, and for generating the resonance condition for the coupling of the involved modes at the long-periodic fiber grating (24).

4. Method according to claim 3, **characterized in that** the determination of the Bragg wavelength shift is carried out by means of the evaluation of the change in intensity of the Stokes amplitude of the backscattered Raman light and
- **in that** the determination of the spectral shift of the light of the long-periodic fiber grating sensors is carried out by evaluating the Stokes Raman spectrum of the transmitted Raman light.

5. Method according to claim 3, **characterized in that** at one or multiple locations along the fiber-optic cable (21), preferably adjacent to the location or the locations that are provided with the fiber Bragg grating(s) (22, 23), a determination of the temperature is carried out by evaluating the backscattered Raman light of the sensor fiber (28), and that a mathematical correction of the cross-sensitivity is carried out for the measurement of temperature and/or expansion or bending based on the information about temperature and Bragg wavelength shift thus obtained.

6. Method according to claim 5, **characterized in that** from the determination of the temperature through the evaluation of the backscattered Raman light from measuring locations that are adjacent to the fiber Bragg grating(s) (22, 23) a mathematical correction is carried out for the determination of the Bragg wavelength shift of cancellation effects at one or multiple fiber Bragg grating(s) (22, 23) which are located between the currently regarded measuring location and one or several receiving stages (11, 35, 52) that are arranged within the measuring device.

7. Measuring device for carrying out spatially distributed and/or remote measurements of physical quantities by evaluating optical signals that are backscattered from at least one fiber-optic cable (21), wherein the measuring device comprises a radiation source (3) for emitting modulated laser light and at least one connection (20) for a fiber-optic cable (21), **characterized in**
• **that** the fiber-optic cable (21) is connected to an receiving stage (11, 35, 52) that transforms the backscattered light into an electrical signal,
• **that** a code generator (6) that is generating a digital electric modulation signal is connected to at least one A/D evaluation component (34, 54), wherein the modulation signal serves for generating a modulated laser light,
• **that** the code generator (6) is connected to the digital evaluation unit (36, 56),
• **that** the receiving stage (11, 35, 52) is connected to a low-pass filter (13, 33) of the digital evaluation unit (36) for the purpose of removing high-frequency interferences of the signal which is backscattered from the fiber-optic cable,
• **that** the low-pass filter (13, 33, 53) is connected to the input of an A/D converter (14, 34, 54) for broadband conversion of the demodulated backscatter signal into a digital response signal, and
• **that** the at least one digital evaluation unit (36, 56) comprises n correlation stages for respectively correlating the digital response signal with the modulation signal for the purpose of generating n measuring data sets,
• wherein the digital evaluation unit (36, 56) comprises an output for outputting the n measurement data sets to an evaluation computer (40) for the purpose of evaluation either directly or via a buffer memory, so that spatially resolved measurement values are generated and output.

8. Measuring device according to claim 7, **characterized in that** the code generator (6) is connected to a number n of the n buffer memories (15, 51) that are present in the digital evaluation unit (36, 56) and that respectively generate a pre-definable time delay, and **in that** the digital evaluation unit (36, 56) comprises a plurality of n correlation stages for respectively correlating the digital response signal with the delayed modulation signal from the plurality of the n buffer memories (15, 51), so that n measurement data sets are created.

9. Measuring device according to claim 7 or 8, **characterized in that** the measuring device has multiple digital evaluation units (36, 56), which differ from one other in the evaluation of one physical quantity, respectively.

10. Measuring device according to claim 7 or 9, **characterized in that** at least one digital evaluation unit (36, 56) is equipped with a device for determining a reference signal for correction of systemic signal interferences.

11. Measuring device according to one of claims 7 to 10, **characterized in that** a device (7, 57) consisting of a transmission and a receiving stage is connected to an optical return line (21, 27), via which the transmitted spectrally evaluated Stokes Raman signal reaches said device (7, 57) from both ends of at least one fiber-optic cable (21, 24) that is equipped with long-periodic fiber grating, and **in that** said device (7, 57) is equipped for evaluation according to a spectrometric method.

12. Fiber-optic sensor cable for use in a measuring device according to one of the claims 7 to 11, **characterized in that** the senor cable (2) comprises either
- at least-one section, in which a fiber-optic cable (21) lies,
- or a fiber-optic cable (21) which is provided with at least one temperature sensor measurement section (28),
- or a fiber-optic cable (21) provided with a section with at least one fiber grating (22, 23, 24), with a start-up length (25) being used for generating the Raman Stokes light,
- or a combined arrangement of sections comprised of temperature sensor measurement sections (28) with at least one fiber Bragg grating (22, 23)
- or a combined arrangement of sections comprised of temperature sensor measurement sections (28) with at least one long-periodic fiber grating (24).

13. Sensor cable according to claim 12, **characterized in that** the sensor cable (2) is provided with a sleeve (80) and a two-part pulling device (65), which can be fixedly connected with a measuring object arranged in an technical-engineering construction, wherein the pulling device (65) comprises a coiling device (66), in order to coil the sensor cable (2) in such a manner that the fiber-optic cable (21) comes to rest at the inside of the sleeve (80) along a measurement length to be examined, so that a length variation that is impressed by the measuring object onto the sleeve (80) of the sensor cable (2) and/or an impressed bending is transferred to the fiber-optic cable (21).

14. Sensor cable according to claim 13, **characterized in that** the two-part pulling device (65) comprises a device for pre-stressing the sensor cable (2) in such a manner, that the sleeve (80) can be stretched at least to such an extent that the fiber-optic cable (21) is elastically pre-stressed within the sleeve (80).

## Revendications

1. Procédé de mesure de manière répartie dans l'espace et/ou à distance de grandeurs physiques, préférablement la dilatation, l'oscillation ou la température sur des structures d'ingénierie, par évaluation de signaux optiques rétrodiffusés en provenance d'au moins un conducteur optique (21),
le procédé comprenant les étapes suivantes:
• un générateur de code (6) produit un signal de modulation (5) numérique et électrique sous forme d'une séquence de nombre prédéterminé d'impulsions de différentes longueurs et de même amplitude, la séquence étant acheminée à une source de lumière (3) à l'aide d'un modulateur RF (4) afin de produire une lumière à laser modulée afin d'irradier ladite lumière à laser dans l'au moins un conducteur optique (21),
• le signal de modulation (5) produit par le générateur de code (6) est acheminé à un dispositif d'analyse (56) dans lequel le signal de modulation (5) est temporisé n fois avec n mémoires intermédiaires (51) qui produisent une temporisation prédéterminable,
• le signal optique rétrodiffusé en provenance d'au moins un conducteur optique (21) et contenant des propriétés de points répartis sur la distance mesurée est acheminée à une photodiode (32) dans laquelle le signal optique est converti en un signal électrique à large bande,
• le signal électrique est renforcé, filtré (53) et acheminé à un convertisseur ND (54), puis transposé en un signal de réponse numérique à large bande,
• le signal de réponse numérique est indiqué sur le dispositif d'analyse (56) comprenant au moins
- les mémoires intermédiaires n (51) et n étapes de corrélation et n tampons de sortie (58),
- le signal de réponse numérique est corrélé n fois avec le signal de modulation temporisé en provenance des mémoires intermédiaires (51) afin de former n ensembles de données de mesure des points individuels,
- les ensembles de données sont transmises à un ordinateur d'analyse (40) à des fins d'analyse directement ou par le biais d'une mise en mémoire intermédiaire afin de former et d'émettre des valeurs de mesure à résolution locale.

2. Procédé selon la revendication 1, **caractérisé en ce qu'**une partie de la lumière émise est découplée à partir du trajet de faisceau de la source de la lumière (3) par un premier séparateur de faisceau (10), puis acheminée à un premier étage de réception (11) avec une photodiode (12) adéquate afin de convertir le signal optique en signal électrique, l'étage de réception (11) étant relié à un filtre passe-bas (13) d'un dispositif d'analyse numérique (36) afin d'éliminer les perturbations à haute fréquence du signal rétrodiffusé par le conducteur optique (21).

3. Procédé selon la revendication 1 ou 2, **caractérisé en ce que** l'au moins un conducteur optique (21) est utilisé :
- comme fibre sensorielle (28) ou
- comme conducteur optique muni d'un réseau de Bragg sur fibre (22, 23), ou
- comme conducteur optique muni d'un réseau de fibre de longue période (24), ou
- comme fibre sensorielle (28) avec plusieurs réseaux de Bragg sur fibre (22, 23), une lumière de pompage avec un spectre d'émission à bande étroite étant utilisé pour produire la diffusion Stokes-Raman spontanée à large bande comme source de rayonnement intrinsèque, qui est utilisé pour déterminer le décalage de la longueur d'onde de Bragg sur au moins un réseau de Bragg sur fibre (22, 23) dans le conducteur optique, et pour produire une condition de résonance pour le couplage des modes impliqués au réseau de fibre à longue période (24).

4. Procédé selon la revendication 3, **caractérisé en ce que** la détermination du décalage de la longueur d'onde de Bragg a lieu grâce à l'analyse du changement d'intensité de l'amplitude Stokes de la lumière Rama rétrodiffusée et
- que la détermination du décalage spectral de la lumière des capteurs du réseau de fibre à longue période a lieu grâce à l'analyse du spectre Stokes-Raman de la lumière Raman transmise.

5. Procédé selon la revendication 3, **caractérisé en ce qu'**est déterminée la température à un ou plusieurs endroits le long du conducteur optique (21), idéalement avoisinant le ou les points pourvus d'un ou de réseaux de Bragg sur fibre (22, 23), par l'analyse de la lumière Raman rétrodiffusée de la fibre sensorielle (28), et qu'avec les informations ainsi obtenues sur la température et le décalage de la longueur d'onde de Bragg, il est possible de corriger par ordinateur la sensibilité croisée pour la mesure de la température et/ou de l'allongement ou de la courbure.

6. Procédé selon la revendication 5, **caractérisé en ce qu'**à partir de la détermination de la température par l'analyse de la lumière Raman rétrodiffusée par les points de mesure avoisinant le ou les réseaux de Bragg sur fibre (22, 23) est effectuée une correction par ordinateur afin de déterminer le décalage de la longueur d'onde de Bragg par des effets d'extinction sur un ou plusieurs réseaux de Bragg sur fibre (22, 23), qui sont disposés entre le point de mesure actuellement analysé et un ou plusieurs étages de réception (11, 35, 52) disposés dans le dispositif de mesure.

7. Dispositif de mesure pour la prise de mesures répartie dans l'espace et/ou à distance de grandeurs physiques par évaluation de signaux optiques rétrodiffusés en provenance d'au moins un conducteur optique (21), le dispositif de mesure comprenant une source de rayonnement (3) pour l'émission d'une lumière à laser modulée et au moins un raccord (20) pour un conducteur optique (21), **caractérisé en ce que**
• le conducteur optique (21) est relié avec un étage de réception (11, 35, 52) convertissant la lumière rétrodiffusée en signal électrique,
• un générateur de code (6) produisant un signal de modulation électrique et numérique est relié à au moins un module d'évaluation analogue/numérique (34, 54), le signal de modulation servant à produire une lumière à laser modulée,
• le générateur de code (6) est relié avec le dispositif d'évaluation numérique (36, 56),
• l'étage de réception (11, 35, 53) est relié à un filtre passe-bas (13, 33) du dispositif d'évaluation numérique (36) afin d'éliminer les perturbations à haute fréquence du signal rétrodiffusé par le conducteur optique,
• le filtre passe-bas (13, 33, 53) est relié avec l'entrée d'un convertisseur numérique analogue (14, 34, 54) pour la conversion à large bande du signal rétrodiffusé démodulé en un signal de réponse numérique, et
• que l'au moins un dispositif d'évaluation numérique (36, 56) comprend n étages de corrélation pour la corrélation du signal de réponse numérique avec le signal de modulation afin de former n ensembles de données de mesure,
• le dispositif d'évaluation numérique (36, 56) comprenant une sortie pour l'émission de n ensembles de données de mesure vers un ordinateur d'évaluation (40) pour l'évaluation, directement ou par le biais d'une mémoire intermédiaire, afin de former et d'émettre des valeurs de mesure à résolution locale.

8. Dispositif de mesure selon la revendication 7, **caractérisé en ce que** le générateur de code (6) est relié à un nombre n de mémoires intermédiaires (15, 51) présentes dans le dispositif d'évaluation numérique (36, 56) et produisant chacune une temporisation prédéterminable, et que le dispositif d'évaluation numérique (36, 56) comprend une multitude de n étages de corrélation pour la corrélation du signal de réponse numérique avec le signal de modulation temporisé à partir de la multitude des n mémoires intermédiaires (15, 51) afin de former un ensemble de données de mesure.

9. Dispositif de mesure selon les revendications 7 ou 8, **caractérisé en ce que** le dispositif de mesure présente plusieurs dispositifs d'évaluation numériques (36, 56) qui se distinguent chacun dans l'évaluation d'une taille physique.

10. Dispositif de mesure selon les revendications 7 ou 9, **caractérisé en ce qu'**au moins un dispositif d'évaluation numérique (36, 56) est équipé d'un appareil pour le calcul d'un signal de référence à des fins de correction des perturbations du signal engendrées par le système.

11. Dispositif de mesure selon l'une des revendications 7 à 10, **caractérisé en ce qu'**un dispositif composé d'étages d'émission et de réception (7, 57) est branché à une ligne de retour optique (21, 27) par laquelle, à partir des deux extrémités d'un conducteur optique (21, 24) équipée d'un réseau de fibre à longue période, le signal Stokes-Raman transmis et ayant fait l'objet d'une analyse spectrale parvient au dispositif énoncé précédemment (7, 57) et le dispositif énoncé précédemment (7, 57) est équipée pour effectuer une analyse selon un procédé spectrométrique.

12. Câble sensoriel à fibre optique pour l'utilisation dans un dispositif de mesure selon l'une des revendications 7 à 11, **caractérisé en ce que** le câble sensoriel (2) comprend soit
- au moins une section dans laquelle est disposé en conducteur optique (21)
- ou un conducteur optique (21) pourvu d'au moins une section de mesure avec capteur de la température (28),
- ou un conducteur optique (21) pourvu d'une section avec au moins un réseau de fibre (22, 23, 24) avec une longueur d'avance (25) pour la production d'une lumière Raman-Stokes,
- ou un assemblage combiné de sections composées d'une section de mesure avec capteurs de température (28) avec au moins un réseau de Bragg sur fibre (22, 23)
- ou un assemblage combiné de sections composées d'une section de mesure avec capteurs de température (28) avec au moins un réseau de fibre (24) à longue période.

13. Câble sensoriel selon la revendication 12, **caractérisé en ce que** le câble sensoriel (2) est pourvu d'une gaine (80) et d'un dispositif de traction en deux pièces (65) pouvant être relié à un objet de mesure disposé dans une structure d'ingénierie, le dispositif de traction (65) comprenant un dispositif d'enroulement (66) pour embobiner le câble sensoriel (2) de telle façon que le conducteur optique (21) touche à la paroi interne d'une gaine (80) le long d'une distance de mesure devant être analysée, de façon à ce qu'un changement de longueur et/ou une courbure se déportant à travers l'objet de mesure sur la gaine (80) du câble sensoriel (2) se transfert sur le conducteur optique (21).

14. Câble sensoriel selon la revendication 13, **caractérisé en ce que** le dispositif de traction en deux pièces (65) comprend un dispositif de prétension du câble sensoriel (2), de sorte que la gaine (80) puisse être étirée de telle façon que le conducteur optique (21) est précontraint élastiquement à l'intérieur de la gaine (80).
